Europäisches Patentamt

European Patent Office

Office européen des brevets

(11) Veröffentlichungsnummer: **0 203 269 B1**

# EUROPÄISCHE PATENTSCHRIFT

(45) Veröffentlichungstag der Patentschrift: **06.11.91**

(51) Int. Cl.5: **H02G 3/06**

(21) Anmeldenummer: **86102384.4**

(22) Anmeldetag: **24.02.86**

(54) **Kabelverschraubung.**

(30) Priorität: **25.05.85 DE 3519014**

(43) Veröffentlichungstag der Anmeldung:
**03.12.86 Patentblatt 86/49**

(45) Bekanntmachung des Hinweises auf die
Patenterteilung:
**06.11.91 Patentblatt 91/45**

(84) Benannte Vertragsstaaten:
**CH DE FR GB IT LI**

(56) Entgegenhaltungen:
| | |
|---|---|
| DE-A- 2 348 882 | DE-A- 2 532 666 |
| DE-A- 3 512 578 | DE-C- 1 286 173 |
| FR-A- 960 397 | FR-A- 2 306 391 |
| FR-A- 2 309 054 | FR-A- 2 358 766 |
| GB-A- 2 080 900 | US-A- 2 288 506 |
| US-A- 2 424 067 | US-A- 2 585 453 |
| US-A- 3 633 944 | |

(73) Patentinhaber: **Anton Hummel GmbH Metall-warenfabrik**
**Mozartstrasse 2 - 5**
**W-7808 Waldkirch(DE)**

(72) Erfinder: **Gehring, Peter**
**Eichhofweg**
**W-7809 Simonswald-Griesbach(DE)**

(74) Vertreter: **Patentanwälte Dipl.-Ing. Hans Schmitt Dipl.-Ing. Wolfgang Maucher**
**Dreikönigstrasse 13**
**W-7800 Freiburg i.Br.(DE)**

## Beschreibung

Die Erfindung betrifft eine Kabelverschraubung für isoliertes Kabel oder Schutzschlauch mit einer Schraubhülse, mit einer damit - vorzugsweise mittels Gewinde - verbindbaren Gegenhülse und mit einem damit oder dadurch gegen das Kabel oder einen Schutzschlauch preßbaren Klemmeinsatz aus härterem Werkstoff als der Kabelmantel, wobei die Gegenhülse od. dgl. den Klemmeinsatz außen mit einer Ringfläche zumindest an der Stirnseite übergreift und beim Anziehen der Verbindung bzw. des Gewindes mit einer sich verjüngenden Form, z. B. mittels eines Konus, einen mit axialen, an der Stirnseite mündenden Schlitzen versehenen Bereich des Klemmeinsatzes radial gegen das Kabel hin verformt, das Kabel so festlegt und mittelbar oder unmittelbar abdichtet.

Kabelverschraubungen dienen z. B. zum Einführen von Kabeln in Maschinen, Schaltschränke od. dgl. oder zur Durchführung durch Wandungen und sind in verschiedensten Konstruktionen und Ausführungsformen bekannt. Dabei sollen diese Kabelverschraubungen einer sicheren Abdichtung und Befestigung des Kabels dienen, wobei in der Regel eine Kabelklemmung durch die Verbindung der Schraubhülse mit der Gegenhülse bewirkt wird. Durch eine axiale Bewegung dieser beiden Hülsen gegeneinander, insbesondere durch ein Verschrauben der Teile miteinander, wird der Klemmeinsatz aufgrund seiner Schlitze radial zusammengedrückt, so daß er sich um das Kabel legt, dieses einschnürt, festklemmt und auch abdichtet.

In der Praxis hat sich gezeigt, daß trotz vielfältiger Lösungen von solchen Kabelverschraubungen und dabei verwendeten Klemm- oder Dichteinsätzen nach einiger Zeit die Kabel oder Schutzschläuche wieder locker werden und die Dichtwirkung nachläßt.

Aus der DE-OS 17 50 095 ist eine Kabelverschraubung der eingangs erwähnten Art bekannt, und in der Einleitung der DE-OS 17 50 095 wird darauf hingewiesen, daß vor allem Dichtmaterial im Laufe der Zeit zu kriechen beginnt, wodurch der Dichtungsdruck bzw. der von der Verschraubung erzeugte Druck nachläßt oder aufgehoben wird. Dabei besteht nicht nur die Gefahr, daß der Werkstoff eines überwiegend aus kautschukartigen Stoffen oder leicht verformbaren Kunststoffen gefertigten Dichteinsatzes davonkriecht, sondern daß auch der vergleichbare Werkstoff der Kabel- oder Schlauchummantelung dem Klemmdruck durch Davonkriechen ausweicht.

Der Klemmeinsatz besteht in der Regel aus einem elastischen, jedoch gegenüber dem Kabelmantel oder einem Dichtungseinsatz härteren Kunststoff und hat zur Erhöhung seiner Elastizität die eingangs erwähnten Schlitze. Diese Klemmeinsätze haben ebenfalls die Neigung, unter Druck ihre Form und Eigenspannung zu verlieren, so daß die Klemmwirkung nachläßt und die Zugentlastung für das Kabel verlorengeht.

Ob also ein weicher Dichtungseinsatz zusätzlich zu diesem Klemmeinsatz vorhanden ist oder nicht, in jedem Falle ist die nach einiger Zeit zu beobachtende Lockerung eines Kabels in einer Kabelverschraubung der eingangs erwähnten Art darauf zurückzuführen, daß die Klemmung durch davonkriechenden Werkstoff nachläßt.

Auch bei der Kabelverschraubung gemäß der DE-OS 17 50 095 besteht diese Gefahr fort, denn das Ausweichen des dort vorgesehenen Dichtungseinsatzes ist nur nach einer Seite, nämlich der Außenseite im Bereich der Gegenhülse verhindert, während am entgegengesetzten Ende der Dichtungswerkstoff aus der Klemmstelle davonkriechen kann. Darüber hinaus enthält diese Druckschrift keinen Hinweis auf die Gefahr des Nachgebens des Klemmeinsatzes und insbesondere des Kabelmantelwerkstoffes, der ebenfalls nicht am Davonkriechen gehindert ist.

Aus der DE-PS 31 22 388 ist eine Kabelverschraubung der eingangs erwähnten Art bekannt, bei welcher die Gegenhülse einen Klemmeinsatz beaufschlagt, der bei dem Anziehen des Gewindes der beiden verschraubbaren Hülsen einerseits den Kabelwerkstoff beaufschlagt und sich daran festklemmt, während die andere Stirnseite dieses Klemmeinsatzes mit Abstand zum Kabel gegen einen in der Schraubhülse befindlichen Dichtungseinsatz aus weicherem Werkstoff gedrückt wird. Die DE-PS 31 22 388 zeigt im dargestellten Ausführungsbeispiel bei der Darstellung dieser Kabelverschraubung in Gebrauchsstellung deutlich, wie der Dichtungswerkstoff des Dichteinsatzes bereits von vorneherein in eine Richtung verformt wird, in der er im Laufe der Zeit davonkriechen kann. Aufgrund der gewölbten Form des Dichteinsatzes ist schon bei geringer Spannungsverminderung in diesem Dichteinsatz durch Materialermüdung oder durch ein Davonkriechen des Werkstoffes mit einer nachlassenden Dichtwirkung zu rechnen.

Aus der DE-PS 30 17 383 ist eine Kabelverschraubung bekannt, bei welcher zwischen der Dichtung und der Schraubhülse ein Drehschutzring zur Verminderung der Reibung gegenüber einem Dichtungseinsatz vorgesehen ist. Auch dadurch wird jedoch ein Davonkriechen der Dichtungsmasse nicht verhindert, die von vorneherein stirnseitig aus der als Überwurfmutter ausgebildeten Gegenhülse austritt.

Schließlich ist aus der DE-OS 25 32 666 eine Kabelverschraubung mit einer Dichtung und einer Zugentlastung bekannt, bei welcher ein Klemmeinsatz mit abwechselnd nach der einen und der entgegengesetzten Seite offenen, sich überlappenden Schlitzen an der Außenseite von einer Dichthülle umgeben ist, die den Klemmdruck von der Schraubhülse und der damit verschraubbaren Gegenhülse übertragen muß. Die Ränder der Dichthülle können dabei im Laufe der Zeit in den Spalt zwischen Kabel und Kabelverschraubung kriechen, der durch den Klemmeinsatz offengehalten wird. Dabei wird die Dichthülle durch die Verschraubung von vorneherein einer ungünstigen Belastung unterworfen, weil sie an ihrem Umfang einen angeformten Ring hat, der in eine Nut der Schraubhülse fixiert durch die axiale Beaufschlagung abgeschert wird.

Es besteht deshalb die Aufgabe, eine Kabelverschraubung der eingangs erwähnten Art zu schaffen, bei welcher eine Lockerung durch davonkriechenden Werkstoff des Kabel- oder Schlauchmantels und/oder eines Dichtungseinsatzes auch nach längerer Zeit vermieden bleibt.

Die Lösung dieser Aufgabe besteht im wesentlichen darin, daR wenigstens zwei zumindest radial nachgiebige Klemmeinsätze vorgesehen sind, deren Klemmbereiche axial mit Abstand nebeneinander am Kabel oder Schlauch angreifen und zwischen sich einen Hohlraum aufweisen und daß in Gebrauchstellung eine durch die beim klemmen entstehenden Einschnürungen des Kabels oder Schlauches gebildete Aufbauchung in dem Hohlraum eingekammert ist. Dieser Hohlraum zwischen den beiden Klemmbereich kann eine durch die Einschnürungen des Kabels oder Schlauches gebildete Aufbauchung aufnehmen. Es wird also durch die beiden mit Abstand angeordneten Klemmstellen nicht nur eine verbesserte Klemmwirkung, sondern nach beiden Orientierungsrichtungen des Kabels hin wirksame formschlüssige Verbindung hergestellt. Dabei wird die Aufbauchung zwischen den Klemmstellen eingekammert und somit der weiche Werkstoff daran gehindert, in der einen oder anderen oder beiden Richtungen davonzukriechen. Er findet dafür keinerlei Spalt oder Öffnung vor. Es wird also ein doppelter Effekt dadurch erzielt, daß das Kabel nicht nur klemmend, sondern durch die Einkammerung der Aufbauchung auch formschlüssig gehalten wird, so daß es Zug- und Stoßbelastungen besser standhalten kann, und gleichzeitig wird ein Davonkriechen des in dem Hohlraum eingekammerten weicheren Werkstoffes, der neben dem Werkstoff des Kabel- oder Schlauchmantels auch eine dort gemäß der folgenden Beschreibung eventuell zusätzlich angeordneten Dichtung sein kann, am Davonkriechen nach irgendeiner Seite bestmöglich gehindert.

Insgesamt ergibt sich so auf einfache Weise eine Kabelverschraubung, bei welcher der Aufwand gegenüber bisherigen Lösungen nicht erhöht, sondern gegebenenfalls sogar vermindert ist, die Wirkung aber über wesentlich längere Zeit erhalten bleibt.

Diese erfindungsgemäße Ausgestaltung der Kabelverschraubung mit zwei Klemmstellen zur Bildung und Aufnahme einer Aufbauchung des Kabels oder Schlauches erlaubt eine Vielzahl von zweckmäßigen und vorteilhaften Ausgestaltungen oder Weiterbildungen, die zum Teil eigene schutzwürdige Bedeutung haben können.

Beispielsweise ist es möglich, daß die beiden Klemmeinsätze an ihren einander zugewandten Stirnseiten eben bzw. innen und außen konische Stirnflächen aufweisen, welche über die äußeren Stirnflächen von beaufschlagenden Innenkonussen der Schraub- oder Gegenhülse zum radialen Zusammenpressen ihrer geschlitzten Bereiche beim Anziehen der Gegenhülse in axialer und radialer Richtung zusammendrückbar sind. Daraus ergibt sich eine Vielzahl von Möglichkeiten, wie in der Praxis die beiden Klemmeinsätze durch die Verbindung von Schraubhülse und Gegenhülse in ihre klemmende Gebrauchsstellung gebracht werden können, ohne daß dabei große Axialbewegungen der beiden Hülsen relativ zueinander erforderlich sind.

Eine besonders einfache und zweckmäßige Ausführungsform der Erfindung kann darin bestehen, daß die beiden Klemmeinsätze einstückig verbunden sind. Dadurch wird vor allem die Herstellung und auch die Montage dieser Klemmeinsätze vereinfacht, weil sie zu einem einzigen Teil verbunden sind, welches in seinem Inneren den Hohlraum zur Aufnahme der durch die Einschnürungen gebildeten Aufbauchung haben kann. Dabei können die beidseitigen, jeweils nach einer Stirnseite hin randoffenen Schlitze dieser einstückig verbundenen Klemmeinsätze jeweils in axialer Richtung über die Hälfte des Klemmeinsatzes hinaus bis in die andere Hälfte verlaufen, so daß sich die geschlossenen Endbereiche der Schlitze überlappen. Entsprechend gut lassen sich die beiden Klemmstellen eines derartigen Zweifach-Klemmeinsatzes in radialer Richtung verformen, um das Kabel einzuschnüren und zwischen den Klemmstellen eine Aufbauchung zu bilden.

Um beim Verbinden von Hülse und Gegenhülse und beim Herstellen der Klemmwirkung ein Verkanten und Verkippen der Klemmeinsätze insbesondere bei einstückiger Ausbildung zu verhindern, können die einstückig verbundenen Klemmeinsätze eine Abstützung gegenüber der Innenseite der Schraubhülse und/oder der Gegenhülse aufweisen, insbesondere etwa in ihrer gemeinsamen Mitte. Dabei kann als Abstützung an dem Klemmeinsatz ein etwa ringförmiger Vorsprung mit einem Außengewinde vorgesehen sein, das zu dem Innengewinde der ein Außengewinde der Schraubhülse übergreifenden Gegenhülse paßt und beim Anziehen der Verschraubung von dem Innengewinde der Gegenhülse erfaßt und beaufschlagt ist. Somit werden die einstückig zu einem Zweifach-Klemmeinsatz verbundenen Klemmeinsätze nicht nur an den konischen Stirnseiten für die Verformung in radialer Richtung erfaßt, sondern auch im gemeinsamen mittleren Bereich etwa radial außerhalb des zwischen den Klemmstellen befindlichen Hohlraumes sogar formschlüssig gehalten und gegen ein Verkippen gesichert, so daß die Klemmkräfte gleichmäßig an beiden Klemmstellen erzeugt werden können.

Vorteilhafte Ausgestaltungen der Klemmeinsätze und ihrer für das radiale Nachgeben wichtigen Schlitze sind Gegenstand der Ansprüche 7 bis 11. Die darin erwähnten Möglichkeiten, diese Schlitze in radialer Richtung schräg verlaufen zu lassen oder an der Innen- bzw. Außenseite der jeweiligen Hülse mit einer Haut zu versehen, verbessern vor allem die Dichtwirkung, weil dann der Klemmeinsatz selbst schon auch im Bereich seiner Schlitze einen Durchtritt von Feuchtigkeit verhindert. Dies ist vor allem wegen der beiden in axialer Richtung mit Abstand nebeneinander befindlichen, einen Hohlraum zwischen sich aufweisenden Klemmstellen vorteilhaft und zweckmäßig.

Eine Ausgestaltung der Erfindung von ganz erheblicher Bedeutung insbesondere für die Verbesserung der Dichtwirkung der Kabelverschraubung kann darin bestehen, daß in dem dem Kabel oder Schlauch zugewandten Hohlraum zwischen zwei Klemmstellen der Klemmeinsätze - bzw. des einstückigen Zweifach-Klemmeinsatzes - wenigstens ein Dichtring eingeschlossen ist und daß die beiden Stirnseiten oder Stirnflächen des Dichtringes zumindest in Gebrauchs- bzw. Klemmstellung von den Klemmbereichen des oder der Klemmeinsätze vollständig übergriffen sind. In diesem Falle nimmt der Hohlraum zwischen den Klemmstellen einen Dichtring in sich auf, der aufgrund der Klemmkräfte und der daraus resultierenden Aufbauchung des Kabels sowie der radialen Zusammendrückung des oder der Klemmeinsätze eine große Dichtkraft erzeugt, ohne daß der Dichtungswerkstoff davonkriechen kann, weil er von den beidseitig von ihm befindlichen Klemmstellen völlig eingekammert wird. Je nach radialer Dicke dieses Dichtringes kann sich das Kabel oder der Schlauch dennoch etwas aufbauchen oder aber auch an einer solchen Verformung eingeschränkt werden, wobei dann aber auch in dem Bereich des Hohlraumes eine entsprechende Klemmwirkung zwischen dem Dichtungswerkstoff und dem Kabel oder Schlauch entsteht.

Eine andere oder zusätzliche Möglichkeit der Verbesserung der Dichtwirkung des erfindungsgemäßen Klemmeinsatzes kann darin bestehen, daß in axialer Richtung neben dem oder den Klemmeinsätzen eine Dichtung angeordnet ist, welche durch Anziehen der Gegenhülse von den Klemmeinsätzen zusammendrückbar ist. Dabei kann beispielsweise zwischen den Klemmeinsätzen und dem axial daneben angeordneten Dichtungseinsatz eine Verbindungshülse angeordnet sein, welche auf der den Klemmeinsätzen zugewandten Seite zur Verformung derselben vorgesehen und gestaltet ist, beispielsweise einen Konus hat, und einen Anschluß für die Gegenhülse aufweist, während die axial gegenüberliegende Seite zur Verformung der Dichtung dient und einen Anschluß für die Schraubhülse aufweist, so daß die Klemmeinsätze und die Dichtung voneinander unabhängig verformbar sind. Dadurch hat es der Benutzer in der Hand, die Klemmwirkung und die Dichtwirkung unabhängig voneinander zu regulieren und einzustellen.

Weitere Möglichkeiten der Ausgestaltung eines oder mehrerer Dichtringe oder Dichteinsätze in Verbindung mit dem oder den Klemmeinsätzen sind Gegenstand der Ansprüche 15 bis 17. Die darin enthaltenen Merkmale geben Möglichkeiten an, wie bei bestmöglicher Klemmung mit zwei einen Abstand zueinander aufweisenden Klemmstellen und Kammerung des Dichtungswerkstoffes sowie Verhinderung eines Davonkriechens des Dichtungswerkstoffes und des Werkstoffes der Kabel- oder Schlauchoberfläche dennoch die letztere gegen Beschädigungen durch die Klemmstellen der Klemmeinsätze geschützt werden kann.

Eine abgewandelte Möglichkeit, die vorzugsweise einstückig verbundenen Klemmeinsätze radial zu fixieren, um ihr Verkippen und Verklemmen zu verhindern und eine gleichmäßige Klemmwirkung an ihren beiden Klemmstellen zu erzeugen, ist Gegenstand der Ansprüche 18 und 19.

Eine andere Ausgestaltung der Erfindung kann darin bestehen, daß die beiden einen Abstand voneinander einhaltenden und eine Aufbauchung des Kabels und/oder einer dort angeordneten Dichtung aufnehmenden Hohlraum zwischen sich aufweisenden Klemmeinsätze voneinander getrennt sind und an den einander zugewandten Stirnseiten einen durch die Verschraubung von Schraubhülse und Gegenhülse verringerbaren oder verschließbaren Abstand aufweisen und/oder teleskopartig und relativ zueinander verschiebbar übereinandergreifen. In diesem Falle ergibt sich beim Verklemmen nicht nur eine radiale, sondern auch eine axiale Verkleinerung des Hohlraumes mit einer entsprechenden Spann- und Klemmwirkung auf einen dort angeordneten Dichtring und/oder die dabei entstehende Aufbauchung der Kabel- oder Schlauchoberfläche. Darüber hinaus können die beiden Klemmeinsätze zunächst unabhängig voneinander verformt und beaufschlagt werden, so daß die Gefahr eines Verkippens oder Verklemmens vermindert bzw. ausgeschlossen ist.

Eine weitere wesentliche und schutzwürdige Ausgestaltung der Erfindung kann darin bestehen, daß wenigstens ein Klemmeinsatz mit einer flachen Schräge an seiner Außenseite vorgesehen ist, die unter spitzem Winkel vom größten Durchmesser gegen die Kabeloberfläche hin abfällt, wobei die Neigung der Schräge gegen die Öffnung der Gegenhülse gerichtet ist und an der Außenseite dieser Schräge ein weiterer, mit der Gegenhülse zusammenwirkender Klemmeinsatz mittelbar oder unmittelbar angreift. Die spitzwinklig abfallende Schräge ist dabei in die Richtung orientiert, in der in aller Regel Zugbelastungen auf das Kabel zu erwarten sind. Dieser zweite Klemmeinsatz erfüllt dabei zusätzlich zu seiner Hauptwirkung noch den Zweck, aufgrund dieser spitzwinkligen Schräge eine selbsthemmende Zugentlasung zu bewirken. Wird nämlich an dem Kabel in der Richtung gezogen, in welcher die Außenseite dieses Klemmeinsatzes unter spitzem Winkel abfällt, möchte dieser Klemmeinsatz, der ja bereits gegen die Kabeloberfläche verklemmt ist, dieser Bewegung folgen und wird dadurch von selbst entsprechend stärker gegen die Kabeloberfläche gepreßt.

In besonders zweckmäßiger und einfacher Weise lassen sich dabei die erfindungsgemäßen Klemmstellen zum Einschnüren des Kabels, eine gute Abdichtung und eine selbsttätige Zugentlastung kombinieren, wenn im Inneren der von den beiden einen Hohlraum zwischen sich freilassenden Klemmeinsätzen beaufschlagten Dichtung oder in mindestens einem der Klemmeinsätze ein zusätzlicher radial nachgiebiger, beidseitig mit Axialschlitzen versehener Einsatz mit spitzwinkligem selbsthemmendem Konus an der Außenseite als zusätzliche Zugentlastung vorgesehen ist. Dabei ist wieder vorteilhaft, daß die erfindungsgemäßen beiden Klemmeinsätze einen Abstand zueinander haben und einen Hohlraum zwischen sich freilassen, in welchem die erwähnte Dichtung und dieser zusätzliche spitzwinklige Klemmeinsatz Platz finden können.

Dabei sind weitere Ausgestaltungen gemäß den Ansprüchen 23 bis 25 insbesondere auch bezüglich des selbsthemmenden zusätzlichen Klemmeinsatzes möglich, die eine Selbsthemmung dieses zusätzlichen Klemmeinsatzes bei beiden an dem Kabel möglichen Zugrichtungen ergeben.

Die Erfindung erlaubt ferner weitere Ausgestaltungen, bei denen beispielsweise der oder die erfindungsgemäßen Klemmeinsätze mit der Schraubhülse oder der Gegenhülse einstückig verbunden sind, wenn diese aus Kunststoff bestehen.

Ferner kann die Zahl der Klemmstellen auch größer sein und es können beispielsweise mindestens drei Klemmstellen vorgesehen sein, deren zwei zwischen sich einen vorzugsweise freibleibenden Hohlraum haben, während zwischen diesen beiden Klemmstellen und einer dritten Klemmstelle ein weiterer Hohlraum mit darin angeordneter Dichtung vorgesehen ist. In dem freibleibenden Hohlraum kann dann eine Aufbauchung des Kabels gut gekammert werden, während in dem zweiten Hohlraum eine Dichtung gegen Davonkriechen gesichert eingeschlossen werden kann.

Eine Kabelverschraubung mit zwei Klemmeinsätzen oder Klemmstellen, die auch zu einem einstückigen Klemmeinsatz verbunden sein können und zwischen den Klemmstellen eine gekammerte Dichtung aufweist, kann eine selbständig schutzfähige Ausgestaltung dahingehend haben, daß diese zwischen zwei Klemmeinsätzen oder Klemmstellen angeordnete und gekammerte Dichtung zumindest beim Anziehen der Verschraubung mit einem ihrer stirnseitigen Enden auf die Außenseite wenigstens eines der Klemmeinsätze schiebbar ist und dabei diesen Klemmeinsatz radial gegen das Kabel hin verformt. Dadurch werden die erfindungsgemäßen Vorteile erreicht und zusätzlich die Dichtwirkung verbessert. Der über einen Klemmeinsatz geschobene Bereich der Dichtung kann dabei auch unter Druck erst recht nicht davonkriechen, weil er gewissermaßen in eine "Sackgasse" eingeführt ist. Ferner dichtet diese Dichtung dann den Klemmeinsatz, den sie außen übergreift, an der Außenseite gut ab, weil sie aufgrund der speziellen Anordnung und Funktion her so fest angepreßt wird, daß dieser Klemmeinsatz seinerseits gegen das Kabel gepreßt wird. Da der gegenüberliegende Rand der Dichtung seinerseits von dem anderen Klemmeinsatz seitlich von dessen Klemmstelle übergriffen wird, kann so dieser Dichtungseinsatz gewissermaßen zwischen beiden Klemmeinsätzen von innen nach außen hindurchtreten und somit auch in diesem Bereich eine gute Abdichtung bewirken.

Dabei kann die Dichtung schon vor dem Anziehen der Verschraubung mit einem stirnseitigen Bereich auf der Außenseite wenigstens eines der Klemmeinsätze aufliegen. Besonders zweck mäßig ist es dabei, wenn die Dichtung die Außenseite des zweiten, der Gegenhülse abgewandten Klemmeinsatzes innerhalb der Schraubhülse beaufschlagt und auf diesen aufschiebbar ist, was dann nämlich durch die Gegenhülse bei deren Anziehen auf einfache Weise bewirkt werden kann. Die axiale Bewegung der Gegenhülse setzt sich dann in eine entsprechende axiale Bewegung des Dirchtungseinsatzes fort.

Eine Ausgestaltung dieser Ausführungsform der Erfindung kann darin bestehen, daß die Dichtung auch den von der Gegenhülse erfaßten Klemmeinsatz beim Verschrauben an dessen Außenseite übergreift und radial gegen das Kabel drückt.

Ausgestaltungen der Klemmeinsätze insbesondere an ihren Stirnseiten zum Zusammenwirken mit zwischen ihnen angeordneten Dichtungen sowie auch der Schraubhülse und der Gegenhülse sind Gegenstand der Ansprüche 33 bis 37.

Die gesamte Kabelverschraubung und insbesondere die Aufrechterhaltung ihrer Wirkung auch über lange Jahre durch Vermeiden von davonkriechenden weichen Werkstoffen kann dadurch verbessert werden, daß im Inneren der Schraubhülse an der der Gegenhülse abgewandten Stirnseite des Klemmeinsatzes ein Gegendruckring zum radialen Verformen des ihm zugewandten geschlitzten Bereiches des Klemmeinsatzes und/oder eines Dichteinsatzes vorgesehen ist. Es ist aber auch möglich, daß in der Gegenhülse eine Absetzung mit oder ohne Hinterschneidung der Innenwand vorgesehen ist, an welcher der Druckring gleich oder erst im Verlaufe der axialen Verschiebung der Absetzung aufliegt, der in eine entsprechend geformte Außennut der einseitig verbundenen Klemmeinsätze, welche in eine gegebenenfalls vorhandene Hinterschneidung hineinragen, vorzugsweise einseitig axiale Schlitze aufweisen, eingreift und die einstückig verbundenen Klemmeinsätze beim Aufschrauben der Gegenhülse im Zusammenwirken mit dem Druck konus der Gegenhülse in radialer Richtung verformt, wobei die Klemmstellen über unterschiedlich gestaltete Druckflächen parallel zusammendrückbar sind und sich beide Klemmstellen gleichzeitig um das Kabel legen. Dadurch wird die bisher übliche einseitige Klemmung des Standes der Technik vermieden. Dabei können die beiden einstückig verbundenen Klemmeinsätze auch einstückig an der Schraubhülse angeformt sein.

Der Gegendruckring kann insbesondere bei Anornung in der Schraubhülse mit seiner dem Klemmeinsatz abgewandten Stirnseite eine sich axial anschließende Dichtung beaufschlagen und beim Anziehen der Gegenhülse in Dichtstellung verformen. Dabei kann der Gegendruckring die Dichtung an der Außenseite übergreifen und dadurch gegenüber dem Gewinde der Hülse abschirmen und schützen.

Gegebenenfalls kann der Gegendruckring geschlitzt sein und unter Einwirkung einer Schrägfläche gleichzeitig radial gegen einen von ihm teilweise übergriffenen Bereich des Dichtringes verformbar sein. In diesem Falle wirkt der Gegendruckring wie ein den Dichtring beaufschlagender Klemmeinsatz.

Weitere Ausgestaltungen der Erfindung bezüglich eines Gegendruckringes oder einer Gewindeabschirmung sind Gegenstand der Ansprüche 44 und 45, sowie 47 bis 49.

Durch die Erfindung wird zunächst einmal sichergestellt, daß bei verbesserter Klemmwirkung innerhalb der Kabelverschraubung aufgrund zweier mit Abstand zueinander angeordneter Klemmstellen die an einem Kabel oder Schlauch auftretenden Kräfte besser aufgenommen werden können.

Gleichzeitig wird dadurch eine Einschnürung erzeugt, die ein Wegkriechen des geklemmten Werkstoffes und somit eine Lockerung der Klemmverbindung im Laufe der Jahre verhindert. Zusätzlich kann die Abdichtwirkung verbessert werden, indem entweder die eingeschnürte Aufbauchung selbst oder eine damit kombinierte Dichtung miteingekammert wird, deren Werkstoff dadurch ebenfalls am Davonkriechen gehindert ist. Je nach Kombination mit weiteren Merkmalen und Maßnahmen können die Klemm- und Dichtkräfte und Wirkungen erhöht werden und es ist sogar eine Ausgestaltung möglich, die vor allem bei einer Zugbeanspruchung des Kabels die Klemmwirkung selbsttätig erhöht.

Nachstehend ist die Erfindung mit ihren ihr als wesentlich zugehörenden Einzelheiten anhand einer Anzahl von Ausführungsbeispielen noch näher beschrieben. Dabei kann eine anhand eines Ausführungsbeispieles erläuterte Merkmalskombination und deren Wirkungsweise sowie Vorteile auch bei einer anderen Ausführungsform, die vergleichbar ausgestaltet ist, in gleicher Weise oder auch nur teilweise auftreten, ohne daß dies im einzelnen jeweils ausdrücklich erwähnt sein muß. Es zeigt in zum Teil schematisierter Darstellung teils mit teils ohne Kabel und überwiegend in einem Längsschnitt oder Teillängsschnitt:

Fig. 1

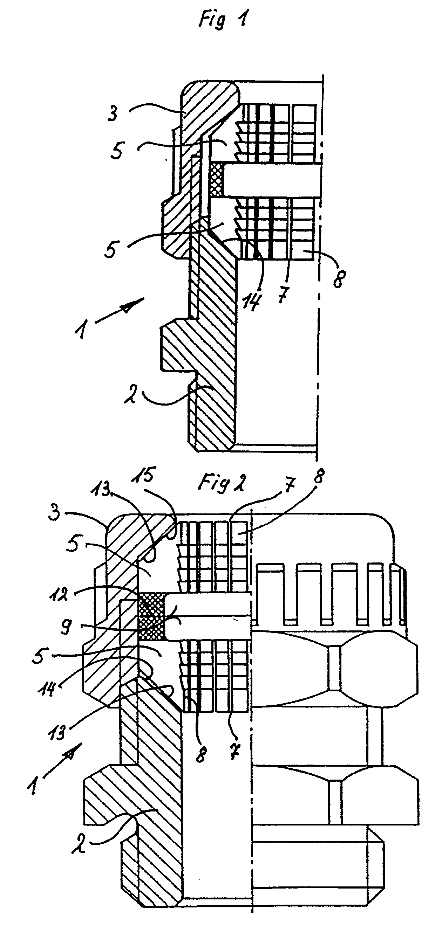

eine Kabelverschraubung mit einem Klemmeinsatz, der mit Abstand zueinander angeordnet zwei Klemmstellen und dazwischen einen Hohlraum hat und einstückig ausgebildet ist,

Fig. 2

eine Kabelverschraubung ähnlich der in Fig. 1, wobei zwei Klemmeinsätze mit ihren Klemmstellen einen Abstand zwischen sich haben und einen Hohlraum einschließen,

Fig. 3

eine Kabelverschraubung, deren beide Klemmeinsätze an den einander zugewandten Stirnflächen zueinander passende Schrägungen haben,

Fig. 4

eine Kabelverschraubung mit zwei Klemmeinsätzen, deren einander zugewandte Stirnflächen radial in einer Querschnittsebene der Kabelverschraubung liegen,

Fig. 5

eine Kabelverschraubung, deren einstückig verbundene Klemmeinsätze einmal an der Innenseite und einmal an der Außenseite eine die Schlitze verschließenden Haut haben,

Fig. 6

einen Teilquerschnitt eines Klemmeinsatzes mit innenliegender Haut an den Schlitzen und im Querschnitt radial verlaufenden Schlitzen,

Fig. 7

einen Teilquerschnitt eines Klemmeinsatzes mit innenliegender Haut und im Querschnitt schräg zum Radius verlaufenden Klemmschlitzen,

Fig. 8
einen Teilquerschnitt eines Klemmeinsatzes mit außen befindlicher Abschlußhaut der Schlitze, wobei die Schlitze im Querschnitt radial angeordnet sind,

Fig. 9
eine der Fig. 8 entsprechende Darstellung mit im Querschnitt schräg zu den Radien verlaufenden Klemmschlitzen,

Fig. 10
eine Kabelverschraubung, bei welcher axial neben den einen Abstand und Hohlraum zwischen sich freilassenden, in diesem Falle einstückig verbundenen Klemmeinsätzen ein zusätzlicher Dichtring innerhalb der Gegenhülse angeordnet ist, der durch deren Verschraubung mit der Schraubhülse gegen eine schräge Stirnfläche dieser Schraubhülse anpreßbar und dadurch verformbar ist,

Fig. 11
eine Kabelverschraubung, bei welcher die Gegenhülse als mit einem Außengewinde versehener Schraubstutzen zum Einschrauben in ein Innengewinde der Schraubhülse ausgebildet ist und die Schraubhülse außerdem ihrerseits mit einer weiteren Schraubhülse verbindbar und in axialer Richtung zu dieser verstellbar ist, wobei zwischen der ersten und der zweiten Schraubhülse ein von den einander zugewandten Stirnflächen dieser Hülsen beaufschlagter Dichtring angeordnet ist.

Fig. 12
eine Kabelverschraubung mit zwei teleskopartig gegeneinander verstellbaren und sich in ihrem Berührbereich etwas übergreifenden Klemmeinsätzen, die in dem Hohlraum zwischen ihren beiden Klemmstellen einen Dichtring aufnehmen, der seitliche Ansätze oder Flansche zum Untergreifen der Klemmstellen und Abschirmen der Klemmstellen gegenüber dem Kabel oder Schlauch hat,

Fig. 13
eine Kabelverschraubung mit axial zueinander verstellbaren einzelnen Klemmeinsätzen, die zwischen sich in ihrem durch ihren Abstand gebildeten Hohlraum einen Dichtring aufnehmen, in Lösestellung und

Fig. 14
die Kabelverschraubung gemäß Fig. 13 in Klemmstellung, wobei der Hohlraum zwischen den beiden durch das Anziehen des Gewindes zwischen Schraubhülse und Gegenhülse etwas verkleinert ist, die Kabel- oder Schlauch-Oberfläche aufgebaucht und diese Aufbauchung sowie der dadurch verformte Dichtring eingeklemmt und aneinandergepreßt sind,

Fig. 15
eine Kabelverschraubung mit einem einstückigen Klemmeinsatz, der einen etwa im Mittelbereich außen umlaufenden Schlitz zum Eingriff eines schneidenartigen Vorsprunges einer der Hülsen als Stabilisierung gegen Verkippen oder Verkanten hat,

Fig. 16
eine Kabelverschraubung, bei welcher axial neben den beiden Klemmstellen ein Dichtring angeordnet ist, der gegenüber dem Gewindebereich der Gegenhülse durch eine hülsenartige geschlitzte Verlängerung des Klemmeinsatzes abgeschirmt ist und seinerseits mit einem in die Klemmbereiche ragenden Ansatz diese gegenüber dem Kabel abschirmt,

Fig. 17
eine der Fig. 16 entsprechende Ausführungsform, bei welcher der Dichtring die Klemmstellen nicht abschirmt, aber zwischen einer Klemmstelle, einer Verlängerung des Klemmeinsatzes und der Stirnseite der Schraubhülse gekammert ist,

Fig. 18
eine der Fig. 17 etwa entsprechende Ausführungsform, bei welcher zwischen dem Klemmeinsatz und dem axial daneben angeordneten Dichtring ein Druckring mit einer Abschirmung des Dichtringes gegenüber dem Gewindebereich angeordnet ist,

Fig. 19
eine etwa Fig. 17 entsprechende Ausführungsform, bei welcher der neben dem Klemmeinsatz mit zwei Klemmstellen befindliche Dichtring auf seiner diesen beiden Klemmstellen abgewandten Stirnseite gegen einen dritten Klemmeinsatz anliegt und so zwischen zwei Klemmstellen gekammert ist,

Fig. 20
eine Kabelverschraubung mit einem zwei Klemmstellen aufweisenden Klemmeinsatz, wobei eine Klemmstelle an ihrer Außenseite durch einen spitzwinkligen Schrägungswinkel derart beaufschlagt ist, daß bei Zug auf das eingeklemmte Kabel in Richtung des Verlaufes dieser Schrägung eine Selbsthemmung entsteht,

Fig. 21
eine Kabelverschraubung, bei welcher die beiden Klemmeinsätze ineinandergesteckt sind und die Berührfläche zwischen beiden Klemmeinsätzen ein schlanker spitzwinkliger Konus für eine Selbsthemmung des inneren Klemmeinsatzes darstellt,

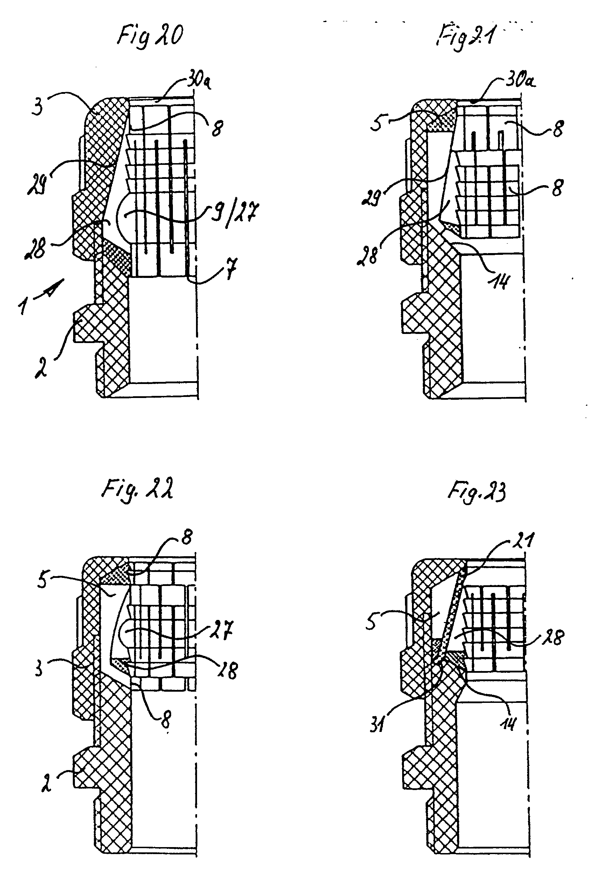

Fig. 22
eine Kabelverschraubung mit zwei einstückig verbundenen Klemmeinsätzen, die zwischen ihren Klemmstellen einen Abstand und einen Hohlraum haben, welcher Hohlraum von einem dritten Klemmeinsatz ausgefüllt ist, der seinerseits an der dem Kabel zugewandten Innenseite einen Hohlraum und an seiner Außenseite einen schlanken Konus für eine Selbsthemmung hat,

Fig. 23

eine etwa der Fig. 21 entsprechende Ausführungsform, bei welcher zwischen den beiden ineinandergesteckten Klemmeinsätzen eine Dichtungshülse eingeklemmt ist,

Fig. 24

eine Kabelverschraubung, bei welcher ein einstückiger, zwei Klemmstellen aufweisender Klemmeinsatz in seinem Hohlraum einen dritten Klemmeinsatz enthält, mit seiner innenliegenden Klemmstelle an einem Druckring abgestützt ist und sich auf die seinen Klemmstellen abgewandte Seite dieses Druckringes fortsetzt und eine Abschirmung für einen dort angeordneten Dichtring bildet,

Fig. 25

eine der Fig. 24 entsprechende Ausführungsform, bei welcher zwischen dem in dem Hohlraum zwischen den beiden Klemmstellen angeordneten dritten Klemmeinsatz und den einstückig verbundenen ersten Klemmeinsätzen sowie deren über einen radial vorstehenden Druckring verlaufende axiale Fortsetzung eine Dichthülse angeordnet ist,

Fig. 26 und 27

eine im Prinzip der Kabelverschraubung gemäß Fig. 11 entsprechende Kabelverschraubung mit insgesamt drei aneinander verschraubbaren Hülsen, wobei zwischen der mittleren Schraubhülse und einer äußeren Gegenhülse, die gemäß Fig. 26 eine Überwurfmutter oder gemäß Fig. 27 ein Einschraubstutzen sein kann, die Klemmeinsätze und zwischen der Schraubhülse und der dritten Hülse ein Dichtring eingesetzt sind,

Fig. 28

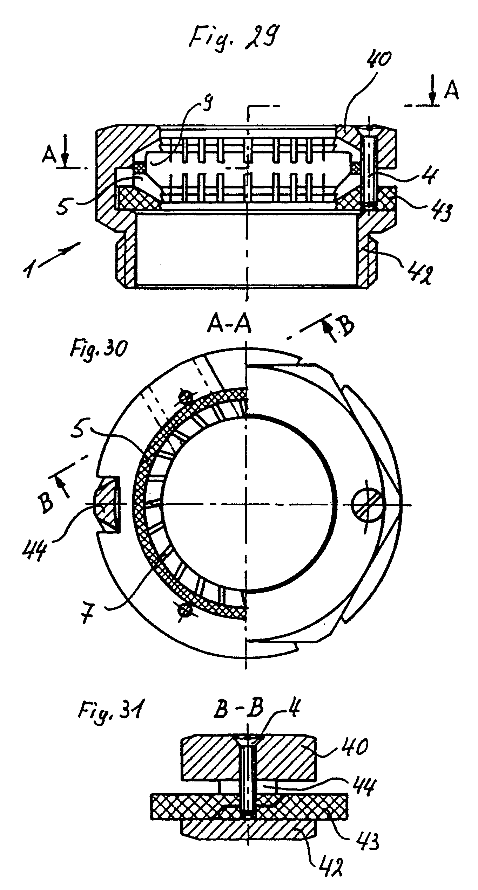

eine Kabelverschraubung mit zwei ineinandergreifenden Klemmeinsätzen, deren äußerer einen axial daneben befindlichen Dichtring gegenüber dem Gewindebereich abschirmt, während der innere Klemmeinsatz an seiner Außenseite eine selbsthemmende Schrägung hat,

Fig. 29

eine Ausführungsform, bei welcher Hülse und Gegenhülse als axial nebeneinander befindliche, durch axial einschraubbare Schrauben verbindbare Ringe ausgebildet sind, die zwischen sich die Klemmeinsätze aufweisen,

Fig. 30

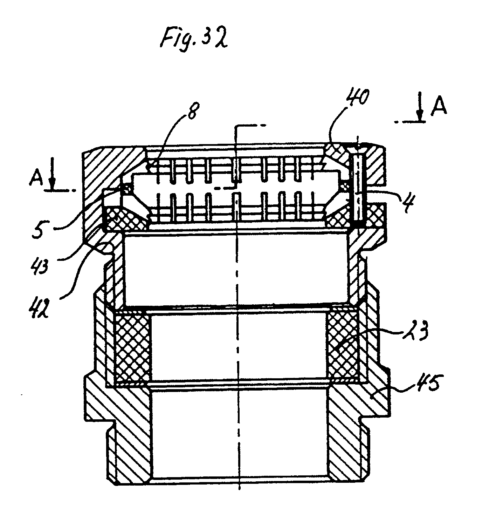

eine teilweise im Querschnitt gehaltene Draufsicht der Kabelverschraubung gemäß Fig. 29 entsprechend den Linien A-A,

Fig. 31

einen Schnitt durch den Randbereich der Kabelverschraubung gemäß der Linie B-B in Fig. 30 mit einer Überlappungs- und Trennstelle des einen Anschlagringes für die Klemmeinsätze, der zum Einfügen in die Kabelverschraubung durch diese Trennstelle in seinem Außenumfang vermindert werden kann,

Fig. 32

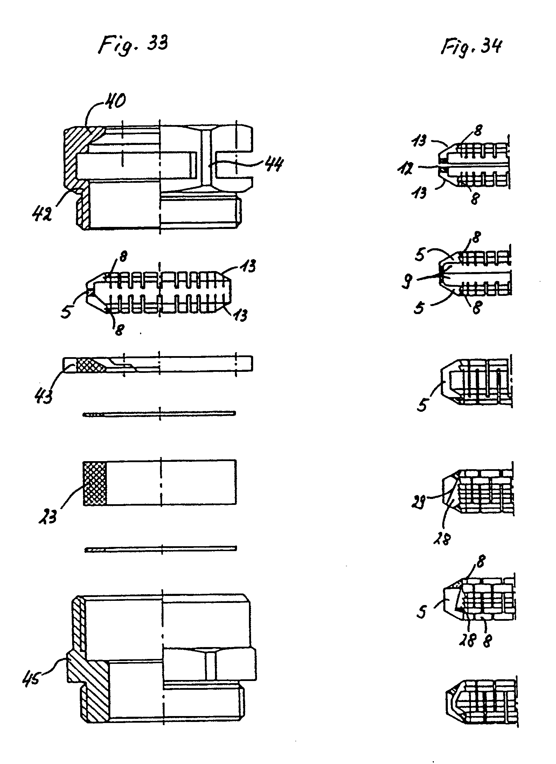

eine der Fig. 29 entsprechende Kabelverschraubung, die ihrerseits mit einer weiteren Schraubhülse und einem dort eingesetzten Dichtring kombiniert ist,

Fig. 33

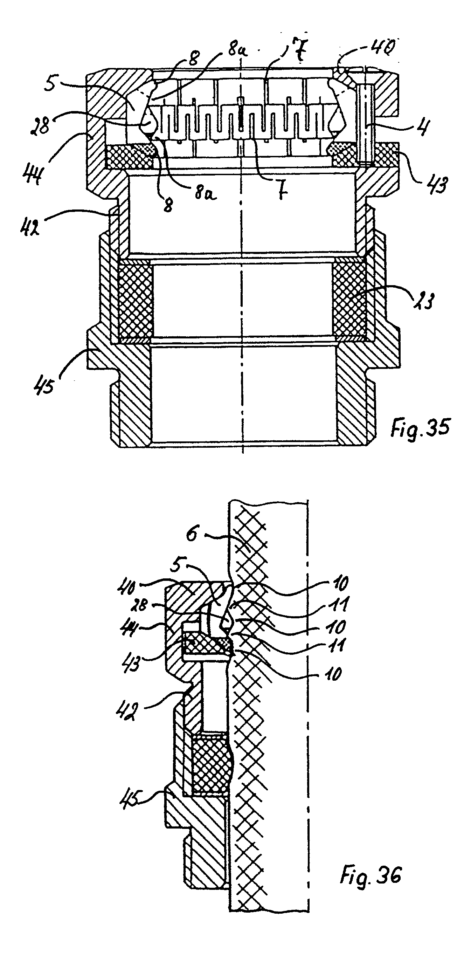

in axialer Richtung auseinandergezogenen die Einzelteile der Kabelverschraubung gemäß Fig.32,

Fig. 34

mehrere verschieden ausgebildete Klemmeinsätze zum Einsetzen in die Kabelverschraubung gemäß den Figuren 29, 32 und 33, wobei zwei einzelne, einen Abstand und einen Hohlraum zwischen sich aufweisende oder auch einstückig verbundene Klemmeinsätze oder auch sich umgreifende Klemmeinsätze gezeigt sind,

Fig. 35

ein weiteres Ausführungsbeispiel einer Kabelverschraubung entsprechend Fig. 32 und 33 mit zwei einstückig verbundenen, einen Hohlraum zwischen sich freilassenden Klemmeinsätzen, die in dem Hohlraum einen dritten Klemmeinsatz in dessen Bereich größter radialer Ausdehnung enthalten, wobei beidseitig dieses dritten Klemmeinsatzes zwischen diesem und den beiden anderen Klemmstellen je ein verkleinerter Hohlraum freigelassen ist,

Fig. 36

die Kabelverschraubung gemäß Fig. 35 in Gebrauchsstellung bei eingeklemmtem Kabel,

Fig. 37

eine Kabelverschraubung, bei welcher zwischen einstückigen Klemmeinsätzen mit zwei einen Abstand und einen Hohlraum zwischen sich aufweisenden Klemmstellen und einem axial daneben befindlichen Dichtring ein Druckring angeordnet ist,

Fig. 38

eine Kabelverschraubung mit zwei ineinandergreifenden Klemmeinsätzen, deren einer selbsthemmend ist, die gegen einen Druckring anliegen, der an einem Dichtring mit einer in den Innenquerschnitt der Kabelverschraubung ragenden Dichtlippe anliegt,

Fig. 39

zwei getrennte Klemmeinsätze mit einem Druckring und einem axial daneben liegenden Dichtring, wobei der Druckring eine den Dichtring gegenüber dem Gewindebereich abschirmende Hülse aufweist,

Fig. 40

eine Ausführungsform mit einem geschlitzten Druckring zum Beaufschlagen des axial neben den Klemmeinsätzen befindlichen Dichtringes,

Fig. 41 und 42

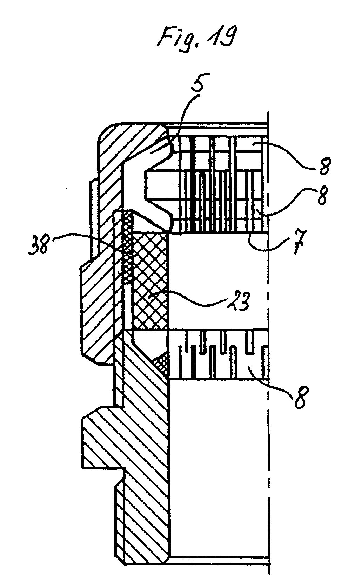

Ausgestaltungen von Kabelverschraubungen mit unterschiedlich gestalteten Druckringen und Dichtringen axial neben dem oder den Klemmeinsätzen,

Fig. 43

eine Ausführungsform mit ineinandergreifenden Klemmeinsätzen einerseits, einem axial danebenliegenden, über einen Druckring beaufschlagten Dichtring, dem auf der anderen Seite benachbart wiederum ineinandergreifende Klemmeinsätze mit einem Zugentlastungseinsatz benachbart sind, so daß der Dichtring zwischen zwei Klemmeinsatz-Kombinationen eingekammert ist,

Fig. 44

die Kabelverschraubung gemäß Fig. 18 in Klemmstellung mit einem Kabel,

Fig. 45

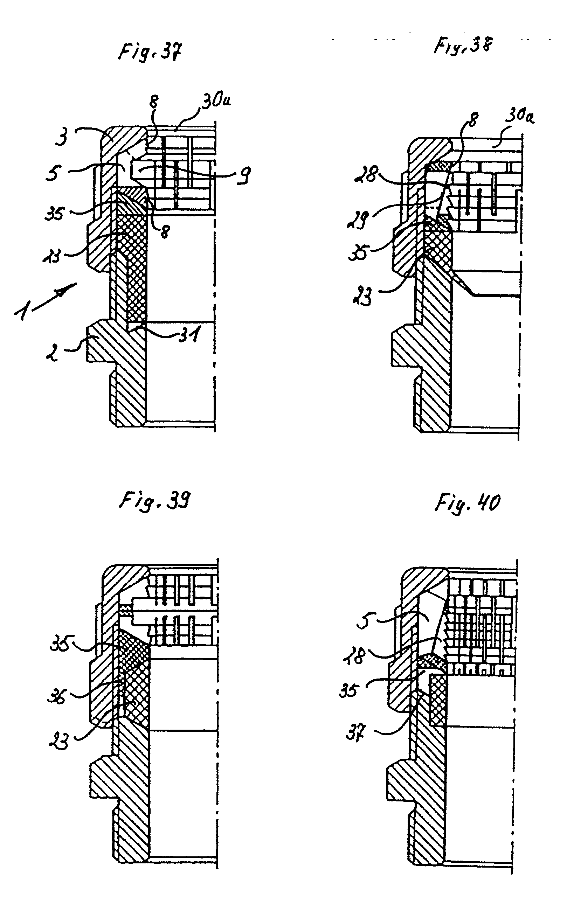

die Kabelverschraubung etwa gemäß Fig. 39 in Klemmstellung,

Fig. 46

die Kabelverschraubung gemäß Fig. 40 in Klemmstellung,

Fig. 47

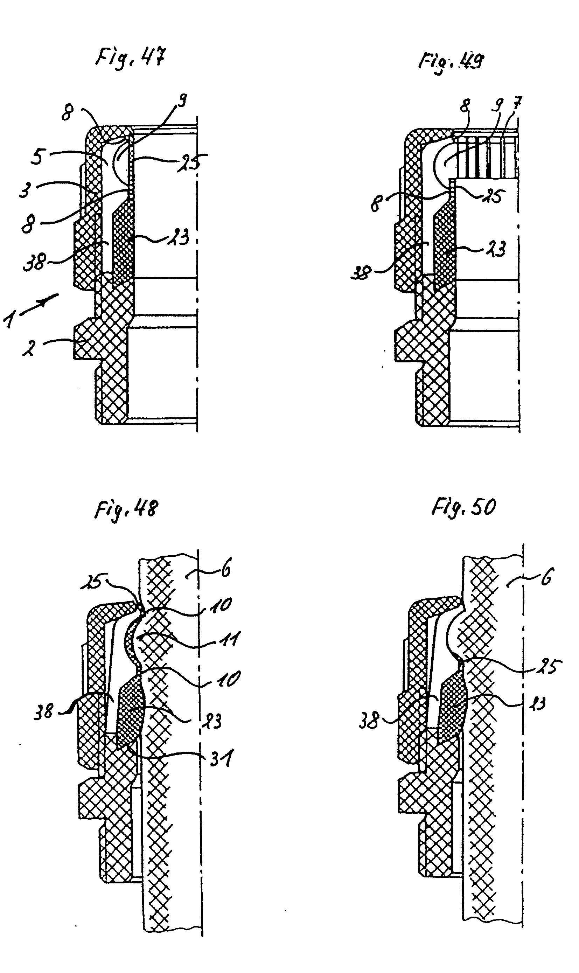

eine Kabelverschraubung mit zwei einstückig verbundenen Klemmeinsätzen, die eine hülsenartige Fortsetzung zum Überdecken eines axial benachbarten Dichtringes aufweisen, der seinerseits einen hülsenartigen Fortsatz zum Untergreifen der Klemmstellen hat,

Fig. 48

die Kabelverschraubung gemäß Fig. 47 in Klemmstellung,

Fig. 49

eine Kabelverschraubung entsprechend Fig. 47, wobei die hülsenartige Verlängerung des Dichtringes nur die dem Dichtring unmittelbar benachbarte Klemmstelle abschirmt,

Fig. 50

die Kabelverschraubung gemäß Fig. 49 in Klemmstellung,

Fig. 51

eine Kabelverschraubung mit zwei einstückig verbundenen, einen Abstand und einen Hohlraum zwischen sich freilassenden Klemmeinsätzen und einer an der Innenseite der Schraubhülse angeordneten schlauchförmigen Dichtungshülse, die bis über die Klemmstellen der Klemmeinsätze reicht,

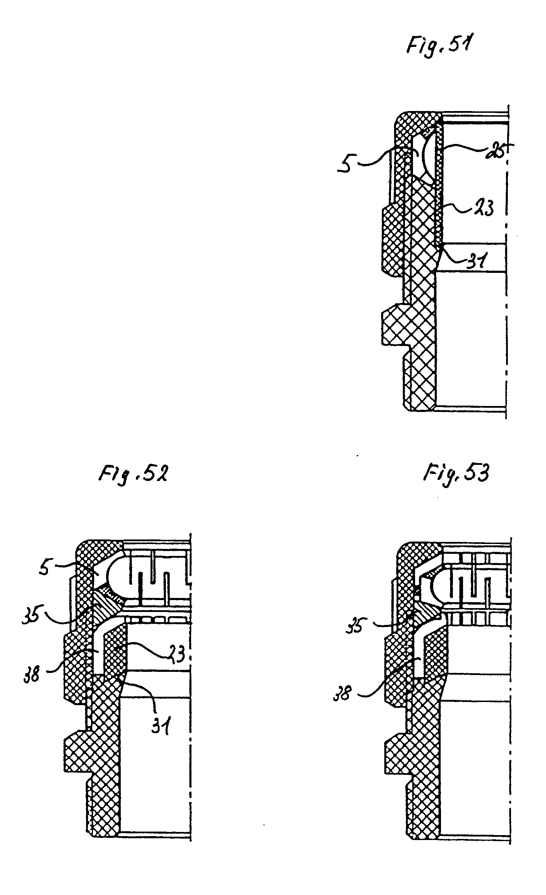

Fig. 52 und bis 54

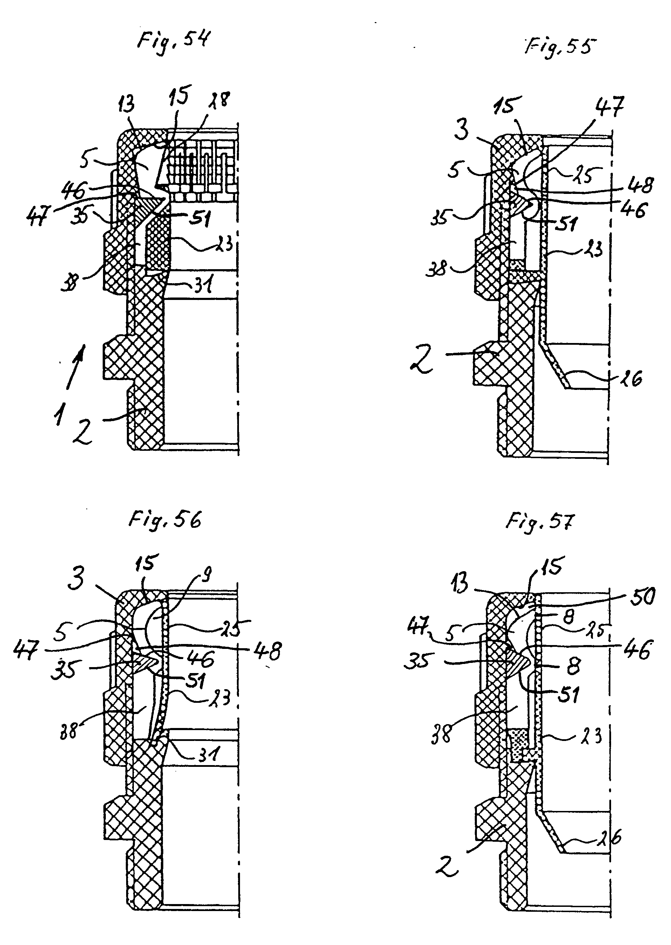

Kabelverschraubungen mit zum Teil an der Einschraubhülse einstückig angeformten unterschiedlichen Klemmeinsätzen, denen ein Druckring benachbart ist, der über einen weiteren Klemmeinsatz od. dgl. einen axial benachbarten Dichtring beaufschlagt,

Fig. 55 bis 57

weitere Ausführungsformen von Kabelverschraubungen mit hülsenförmig die Klemmstellen der Klemmeinsätze überdeckenden Dichtungen, die gemäß Fig. 55 und 57 lippenartige Fortsetzungen gegen das Kabel hin haben oder an einer Ringnut zwischen einer Fortsetzung des Klemmeinsatzes und der Schraubhülse gemäß Fig. 56 gekammert ist,

Fig. 58 bis 61

Varianten einer Schraubhülse, bei welcher mit Abstand zueinander angeordnete Klemmeinsätze und dazwischen in deren Abstand und Hohlraum ein Dichtring vorgesehen ist, der mit einem Randbereich an der konischen Außenseite eines der Klemmeinsätze aufliegt,

Fig. 62

eine Explosionsdarstellung der Kabelverschraubung gemäß Fig. 59,

Fig. 63 und 64

Kabelverschraubungen, bei welchen der Dichtring mit einem Randbereich auf der Außenseite eines der beiden Klemmeinsätze aufliegt, wobei dieser Klemmeinsatz und gegebenenfalls ein weiterer Klemmeinsatz mit selbsthemmender Außenschräge versehen ist,

Fig. 65 und 66

Kabelverschraubungen, bei denen der Dichtring mit beiden Randbereichen auf schräg zum Kabel hin abfallenden Außenseiten der beiden Klemmeinsätze aufliegt, wobei der in axialer Richtung der Gegenhülse abgewandte, in der Schraubhülse befindliche Klemmeinsatz mit selbsthemmender Außenschräge versehen sein kann,

Fig. 67 und 68

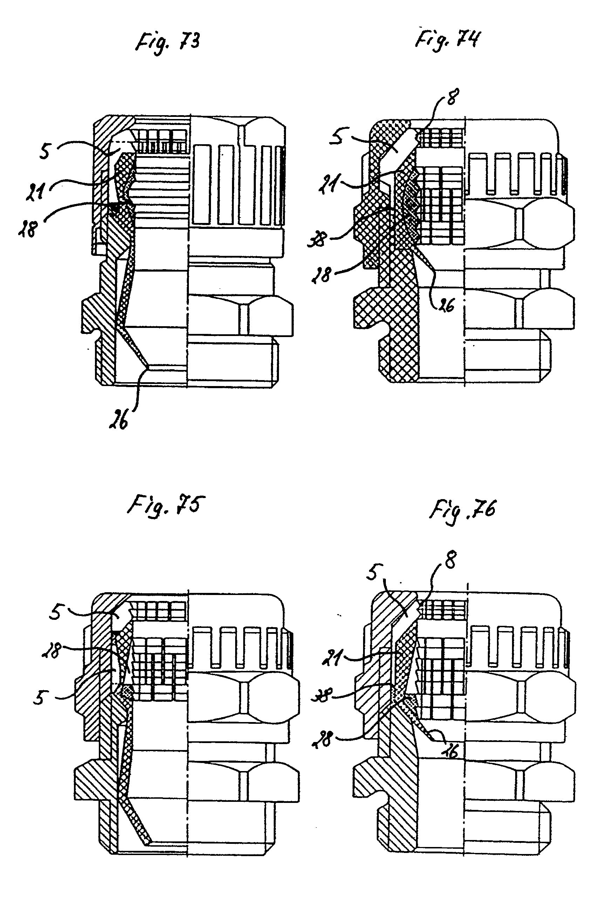

zwei Ausführungsbeispiele von Kabelverschraubungen, bei denen jeweils zwei Klemmeinsätze hintereinander geschaltet und aufeinanderwirkend vorgesehen sind, die nach derselben Seite hin Klemmschlitze haben, wobei der ungeschlitzte Bereich des ersten Klemmeinsatzes den geschlitzten Bereich des zweiten Klemmeinsatzes beaufschlagt und wobei jeder dieser Klemmeinsätze zwischen seinem geschlitzten und seinem ungeschlitzten Bereich jeweils einen Hohlraum hat, wobei die Klemmstellen durch eine Dichtungshülle gegenüber dem Kabel abgeschirmt sind,

Fig. 69

eine Kabelverschraubung mit einem äußeren, eine Dichtung hülsenartig übergreifenden ersten Klemmeinsatz und einem zweiten, innerhalb der Dichtung angeordneten, selbsthemmenden Klemmeinsatz,

Fig. 70

eine Kabelverschraubung mit einem einen Dichtring mit einem Hülsenfortsatz übergreifenden ersten Klemmeinsatz und einem zweiten, seinerseits von der Dichtung übergriffenen, insbesondere selbsthemmenden Klemmeinsatz,

Fig. 71 und 72

zwei Ausführungsformen einer Kabelverschraubung mit zwei sich teleskopartig an den einander zugewandten Rändern übergreifenden Klemmeinsätzen, die in ihrem Zwischenraum einen Dichtring enthalten, der seinerseits einen dritten Klemmeinsatz mit Selbsthemmung umschließt, wobei in Fig. 71 ein in einer Richtung wirksamer selbsthemmender Klemmeinsatz und in Fig. 72 ein in beiden Zugrichtungen selbsthemmender Klemmeinsatz vorgesehen ist,

Fig. 73

eine etwa der Fig. 22 entsprechende Ausführung, wobei sich jedoch zwischen dem äußeren und dem inneren selbsthemmenden Klemmeinsatz, welcher zwischen zwei Klemmstellen einen Hohlraum aufweist, eine Dichtung befindet, welche als Isolierhülse sich fortsetzend an ihrem Ende als Dichtlippe ausgebildet ist,

Fig. 74

eine Ausführungsform einer Kabelverschraubung mit einem von der Dichtung umschlossenen nach beiden Zugrichtungen selbsthemmenden Klemmeinsatz,

Fig. 75

eine Kabelverschraubung mit zwei äußeren Klemmeinsätzen, wobei der beidseitig geschlitzte untere Einsatz über die hindurchgeführte Dichtung eines dritten, sich in der Dichtung befindlichen selbsthemmenden Klemmeinsatz in Gebrauchsstellung radial gegen das Kabel preßt, sowie

Fig. 76

Ausführungsform einer Kabelverschraubung, etwa gemäß Fig. 74, wobei der von dem Dichtring umschlossene Klemmeinsatz in nur einer Zugrichtung selbsthemmend ist.

In der nachfolgenden Figurenbeschreibung der verschiedenen Ausführungsbeispiele der erfindungsgemäßen, im ganzen mit 1 bezeichneten Kabelverschraubung werden anhand einzelner dieser Figuren die wesentlichen verschiedenen Merkmale und Ausgestaltungen verdeutlicht und illustriert, ohne bei Wiederholung in verschiedenen Ausführungsformen jeweils erneut beschrieben zu werden. Die einzelnen Ausführungsbeispiele und ihre Wirkungsweise wird dabei durch die Verwendung übereinstimmender Bezugszeichen auch dann deutlich, wenn das jeweilige Merkmal nicht bei jedem Ausführungsbeispiel beschrieben ist. Darüber hinaus ergeben sich wesentliche Merkmale der einzelnen Ausführungsbeispiele aus der vorstehenden Figurenaufzählung.

Den dargestellten Kabelverschraubungen 1 ist gemeinsam, daß sie jeweils eine Schraubhülse 2 und eine damit mittels Gewinde verbindbare Gegenhülse 3, entweder eine Überwurfmutter - wie in den meisten dargestellten Fällen - oder aber einen Einschraubstutzen aufweisen. Durch das axiale Zusammenschrauben der Schraubhülse 2 und der Gegenhülse 3 bzw. diesen beiden Teilen in Fig. 29 bis 36 entsprechenden Ringstücken, die mit axialen Schrauben 4 gegeneinander bewegt werden, werden im Inneren der Kabelverschraubung 1 angeordnete, noch näher zu beschreibende Klemmeinsätze 5 gegen ein Kabel 6 oder einen Schutzschlauch gepreßt, wobei die Klemmeinsätze 5 aus härterem Werkstoff als der Kabelmantel bestehen. Dadurch wird die Kabelverschraubung 1 an dem Kabel 6 bzw. umgekehrt das Kabel 6 in der Kabelverschraubung 1 fixiert. Dabei übergreift die Gegenhülse 3 einen Klemmeinsatz 5 außen und mit einer Ringfläche 15 an der Stirnseite, wobei diese Ringfläche als Konus ausgebildet ist, so daß der Klemmeinsatz 5 aufgrund von an seiner Stirnseite mündenden Schlitzen 7 nachgibt und radial gegen das Kabel 6 hin verformt wird.

Ferner ist bei allen Ausführungsbeispielen vorgesehen, daß wenigstens zwei radial nachgiebige Klemmeinsätze 5 vorgesehen sind, deren Klemmbereiche 8 axial mit Abstand nebeneinander am Kabel 6 oder einem Schlauch angreifen und zwischen sich einen Hohlraum 9 aufweisen. Dieser Hohlraum 9 kann eine durch die Einschnürungen 10 an den Klemmbereichen 8 gebildete Aufbauchung 11 des Kabels 6 oder der Schlauchoberfläche aufnehmen, wie es beispielsweise in Fig. 36 oder Fig. 44 und 45, 48 und 50 angedeutet ist. Dadurch ergibt sich eine nicht nur kraftschlüssige, sondern sogar formschlüssige Festlegung des Kabels 6, wobei gleichzeitig der relativ weiche Werkstoff der Kabeloberfläche zwischen den Klemmstellen 8 eingekammert und so am Davonkriechen im Laufe der Jahre gehindert wird. Entsprechend länger bleibt eine derartige Kabelverschraubung 1 fest.

Zusätzlich oder statt dessen kann in später noch zu beschreibender Weise in dem Hohlraum 9 auch eine Dichtung und/oder ein weiterer Klemmeinsatz vorgesehen sein, um die Klemmwirkung und die Dichtwirkung noch weiter zu verbessern.

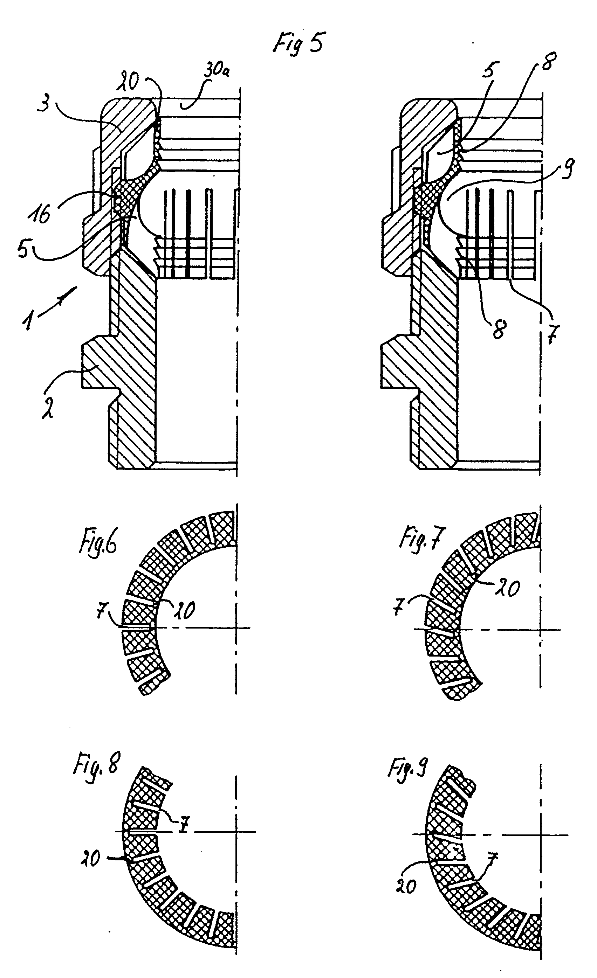

Gemäß Fig. 2 können die beiden Klemmeinsätze 5 an ihren einander zugewandten Stirnseiten ebene Stirnflächen 12 aufweisen. Auch in Fig. 4 erkennt man, daß die einander in Gebrauchsstellung berührenden Stirnseiten der beiden Klemmeinsätze eben sind, wobei diese Ebene wie in Fig. 2 und auch in weiteren vergleichbaren Figuren, beispielsweise Fig. 11, in einer Querschnittsebene rechtwinklig zur Längsachse der Kabelverschraubung 1 angeordnet sind.

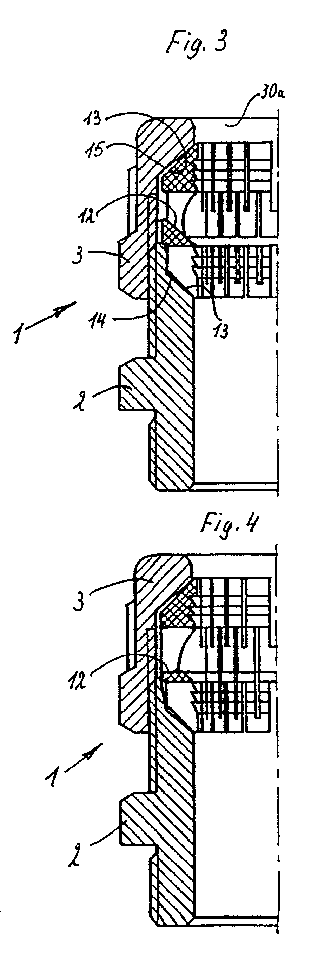

In Fig. 3 ist eine Abwandlung erkennbar, bei welcher die sich berührenden Stirnflächen 12 konisch angeordnet sind, wobei die Schrägung dieser Stirnflächen einander so entspricht, daß beide Stirnflächen wiederum aneinanderliegen.

Die jeweils äußeren, also voneinander abgewandten Stirnflächen 13 sind ebenfalls jeweils schräg angeordnet, wobei in der überwiegenden Zahl der Ausführungsbeispiele die Schrägung vom größeren Außendurchmesser zu dem kleineren Außendurchmesser hin verläuft, so daß die Klemmeinsätze an ihrem Innendurchmesser eine größere Länge als an ihrem Außendurchmesser haben. Diese äußeren Stirnflächen 13 sind von Innenkonussen 14 und 15 der Schraubhülse 2 und der Gegenhülse 3 beaufschlagt und dienen zum radialen Zusammenpressen ihrer Schlitze 7 beim Anziehen der Gegenhülse 3 in axialer Richtung. Wird also die Gegenhülse 3 auf oder in die Schraubhülse 2 geschraubt, nähern sich also die Innenkonusse 14 und 15 dieser beiden Hülsen einander, müssen die Klemmeinsätze in radialer Richtung, also mit ihren Klemmstellen 8 gegen das Kabel 6 hin ausweichen. Bei entsprechendem Kraftaufwand führt dies zu der schon erwähnten Einschnürung 10 an jeder Klemmstelle und dadurch zu der zwischen diesen Einschnürungen 10 befindlichen Aufbauchung 11.

In Fig. 1, 5 und 10 sowie weiteren Figuren, beispielsweise 16, 19 oder 42 sowie auch 47 bis 50 sind die beiden Klemmeinsätze 5 einstückig verbunden. Entsprechend einfach sind Herstellung und Montage. In Fig. 34 sind sowohl zweistückig als auch einstückig ausgebildete Klemmeinsätze 5 dargestellt.

Fig. 18 oder auch Fig. 35 und 37 sind Beispiele dafür, daß die beidseitigen, jeweils nach einer äußeren Stirnseite 13 hin randoffenen Schlitze 7 der einstückig verbundenen Klemmeinsätze 5 jeweils in axialer Richtung über die Hälfte des Klemmeinsatzes 5 hinaus bis in die andere Hälfte verlaufen, so daß sich die geschlossenen Endbereiche der Schlitze 7 jeweils nebeneinanderliegend überlappen. Entsprechend gut kann ein solcher einstückiger Klemmeinsatz mit zwei Klemmstellen radial nachgeben und mit seinen Klemmstellen 8 die gewünschten Einschnürungen 11 erzeugen.

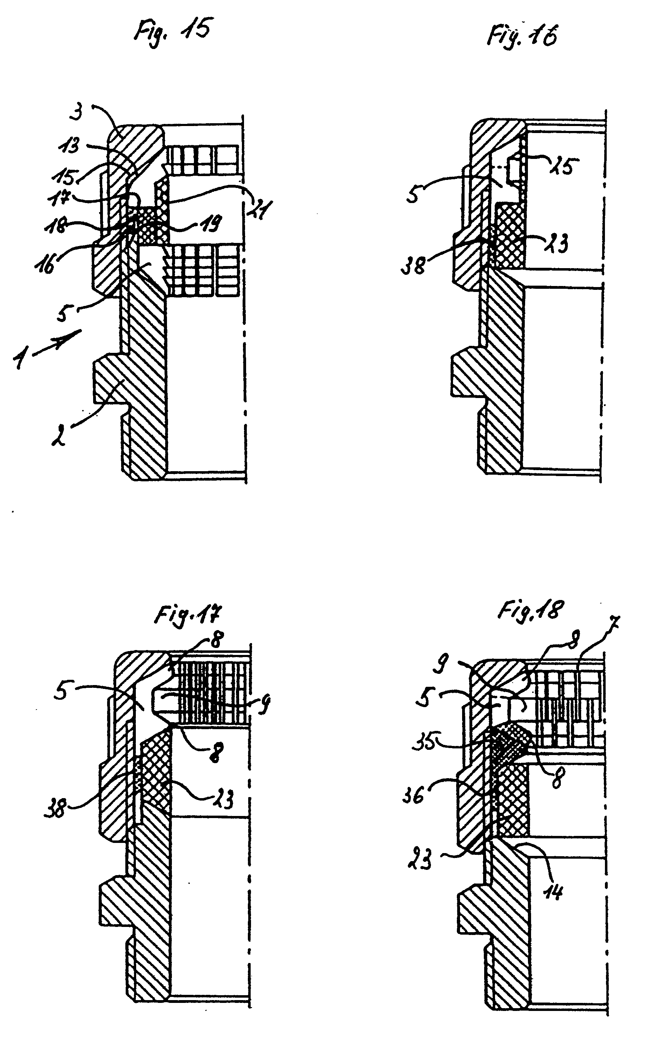

Die einstückig verbundenen Klemmeinsätze 5 können eine Abstützung 16 gegenüber der Innenseite der Schraubhülse 2 und/oder der Gegenhülse 3 aufweisen, die vorzugsweise etwa in ihrer gemeinsamen Mitte angeordnet ist. Beispiele dafür sind die Ausführungsformen nach Fig. 5 oder 15.

Fig. 5 zeigt dabei eine Lösung, bei welcher als Abstützung 16 an dem Klemmeinsatz 5 ein etwa ringförmiger Vorsprung mit einem Außengewinde vorgesehen ist, das zu dem Innengewinde der ein Außengewinde der Schraubhülse 2 übergreifenden Gegenhülse 3 paßt und beim Anziehen der Verschraubung von dem Innengewinde der Gegenhülse 3 erfaßt und beaufschlagt ist. Somit kann selbst bei etwas ungleichmäßiger Beaufschlagung der beiden konischen äußeren Stirnflächen 13 dieser Klemmeinsatz 5 nicht verkantet und gekippt werden. Entsprechend gleichmäßig kommen beide Klemmstellen 8 in Gebrauchsstellung.

Fig. 15 zeigt eine Lösung, bei welcher als Abstützung 16 der einstückig verbundenen Klemmeinsätze 5 ein radial an der Außenseite liegender Stützkragen vorgesehen ist, der mit dem Klemmeinsatz 5 über einen radial vorstehenden Ring oder Steg 17 verbunden ist und seitlich dieser Verbindung gegenüber dem Klemmeinsatz 5 einen ringförmigen Abstand 18 aufweist, in welchen die Stirnseite 19 der Schraubhülse 2 teilweise eingreift. Diese in den ringförmigen Abstand 18 unter den Stützkragen der Abstützung 16 greifende Stirnseite 19 der Schraubhülse 2 ist in diesem Falle etwa schneidenförmig ausgebildet und verdickt sich konisch, so daß sie bei stärkerem Anziehen auch eine umso größere Verklemmung und Abstützung bewirkt.

Bei den meisten Ausführungsbeispielen erkennt man, daß die innere Ringfläche 15 - als Innenkonus - der Gegenhülse 3 und die mit dieser über die Klemmeinsätze 5 zusammenwirkende Gegenfläche - ebenfalls ein Innenkonus 14 - der Schraubhülse 2, zwischen welchen Flächen 14 und 15 die aus zwei einzelnen Stücken oder einstückigen Klemmeinsätzen 5 angeordnet sind, von außen nach innen derart schräg bzw. konisch oder auch gewölbt bzw. gerundet verlaufen, daß sie in ihrem Inneren näher ihrer Mittelachse einen größeren Abstand zueinander haben als an ihren Außendurchmessern und daß die Klemmeinsätze 5 an ihren mit diesen konischen Ringflächen 14 und 15 zusammenwirkenden Stirnseiten 13 ebenfalls abgeschrägt und zusätzlich geschlitzt sind. Durch diese Kombination von teilweise vorher schon erwähnten Merkmalen ergibt sich ein einfacher Aufbau der Kabelverschraubung, bei der dennoch eine Verbesserung und Verlängerung der Klemmwirkung möglich ist.

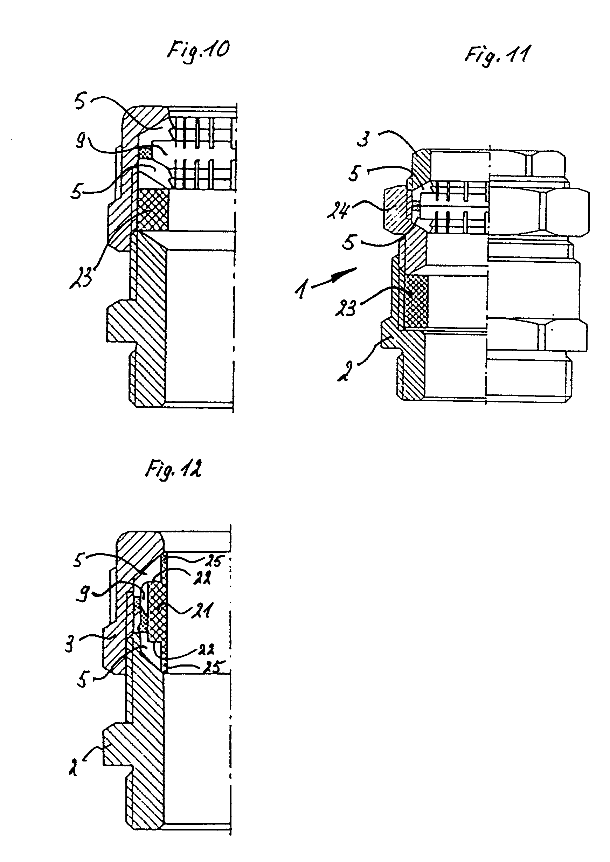

In Fig. 7 und 9 ist angedeutet, daß die in axialer Richtung verlaufenden und stirnseitig offenen Schlitze 7 der Klemmeinsätze 5 in radialer Richtung auch schräg verlaufen können, während sie gemäß Fig. 6 und 8 auch unmittelbar in radialer Richtung laufen können.

Fig. 5 bis 9 zeigt dabei eine Ausgestaltung, die vor allem für die Verbesserung der Dichtwirkung vorteilhaft ist. Die Schlitze 7 können nämlich durch eine dünne, nachgiebige Haut 20 verschlossen sein. Dabei erkennt man in den Figuren 6 und 7 in Verbindung mit Fig. 5, daß die Schlitze 7 der Klemmeinsätze 5 im Bereich der Gegenhülse 3 an der Innenseite mit der Haut 20 verschlossen sind. Die Figuren 8 und 9 zeigen wiederum in Verbindung mit Fig. 5, daß die Schlitze des zweiten Klemmeinsatzes bzw. der zweiten Klemmstelle im Bereich der Schraubhülse 2 an der Außenseite mit der Haut 20 verschlossen sind. Zusammen mit der Abstützung 16 bewirkt ein derartig ausgestalteter und kombinierter einstückiger Klemmeinsatz 5 mit zwei Klemmstellen 8 gleichzeitig eine gute Abdichtung, die durch schräg zu dem Radius verlaufende Schlitze 7 gemäß den Figuren 7 und 9 noch dadurch verbessert werden kann, daß sich die Schlitze 7 beim radialen Verformen besser verschließen und mit ihren Wandungen aneinanderlegen. Demgemäß ergibt sich auch eine gute Abdichtung, wenn schräge Schlitze 7 ohne Abschlußhaut 20 verwendet werden. Die als Dichtungsbund wirkende Abstützung 16 befindet sich dabei zwischen den beiden teilgeschlitzten Bereichen des Klemmeinsatzes 5 gemäß Fig. 5 und hat die erwähnte Doppelfunktion, gleichzeitig als Abstützung und bei Fig. 15 als Dichtung an der Innenseite der Schraubhülse 2 und der Gegenhülse 3 anzugreifen. Somit kann eine derartig gestaltete Kabelverschraubung mit einem einstückigen Klemmeinsatz 5 mit als Dichtungsbund dienender Abstützung 16 und durch eine Haut 20 abgeschlossenen Schlitzen 7 schon ganz alleine nicht nur eine gute Verklemmung des Kabels 6, sondern gleichzeitig eine gute Abdichtung bewirken.

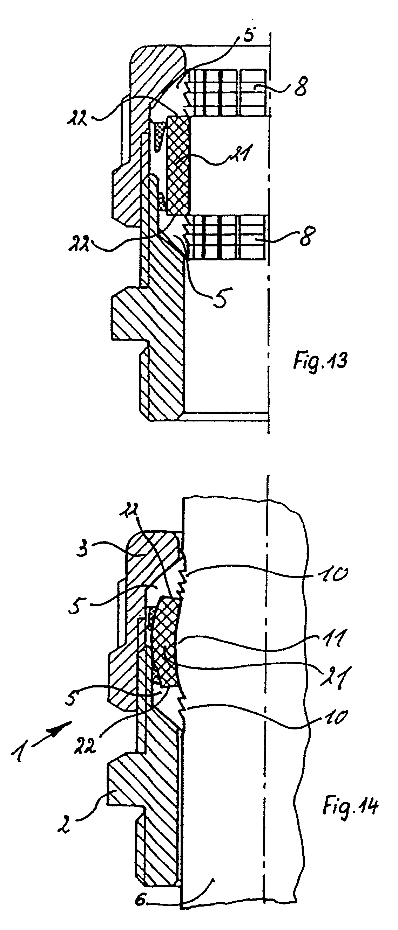

Eine andere Möglichkeit, die Dichtigkeit der Kabelverschraubung 1 zu verbessern, die auch als zusätzliche zu den vorbeschriebenen Maßnahmen anwendbare Möglichkeit gegeben ist, besteht darin, daß in dem dem Kabel 6 oder Schlauch zugewandten Hohlraum 9 bzw. Zwischenraum zwischen zwei Klemmstellen 8 der Klemmeinsätze 5 ein Dichtring 21 eingeschlossen oder angeordnet ist und daß die beiden Stirnseiten oder Stirnflächen 22 des Dichtringes 21 zumindest in Gebrauchsstellung bzw. Klemmstellung von den Klemmbereichen 8 des oder der Klemmeinsätze 5 übergriffen sind. Ein Beispiel dafür erkennt man in der Ausführungsform nach Fig. 13 und 14. In Fig. 13 ist die Kabelverschraubung vor der Fixierung, in Fig. 14 in Gebrauchsstellung erkennbar. Durch die Zusammenpressung der Klemmstellen 8 und die radiale Verformung dieser Klemmstellen 8 des zweistückigen Klemmeinsatzes 5 ist das Kabel 6 an den Klemmstellen 8 eingeschnürt und der zwischen den beiden Klemmstellen 8 befindliche Dichtring 21 vollständig eingekammert. Dabei wird gleichzeitig deutlich, daß der Dichtring noch etwas in radialer Richtung aufgewölbt wird, indem er der Aufbauchung 11 des Kabels 6 etwas ausweicht. Es ist einleuchtend und deutlich, daß dies nicht nur eine sehr feste und dauerhafte Verklemmung des Kabels 6, sondern auch eine gute Abdichtung ergibt, ohne daß der Dichtungswerkstoff im Laufe der Zeit durch irgendwelche Schlitze oder Fugen wegkriechen kann.

Ein anderes Beispiel für einen zwischen zwei Klemmstellen gekammerten Dichtring 21 zeigt Fig. 19, bei welcher als zusätzliche Besonderheit nicht nur zwei einstückig verbundene Klemmeinsätze, sondern in noch zu beschreibender Weise ein dritter Klemmeinsatz vorgesehen sind.

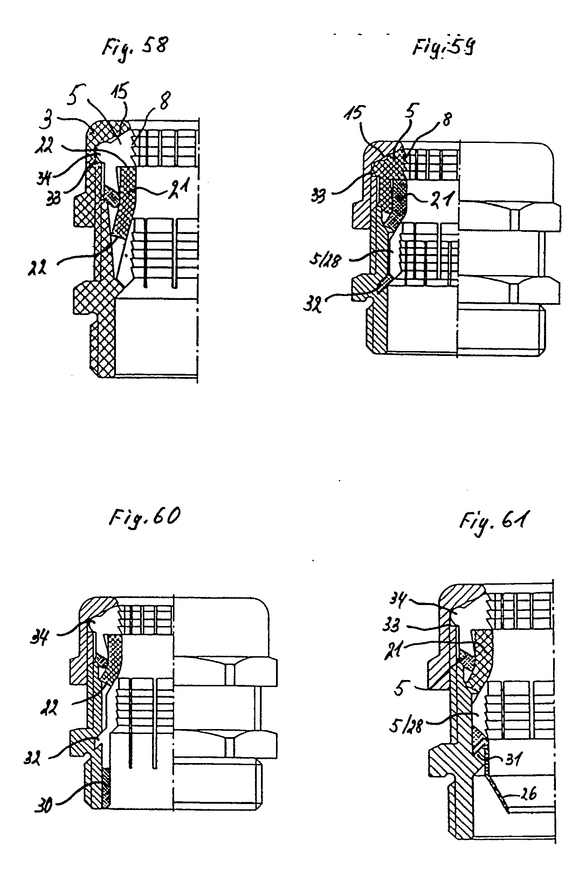

Weitere Beispiele für einen zwischen zwei Klemmstellen 8 gekammerten Dichtring 21 zeigen die Figuren 58 bis 66, wobei zusätzliche Maßnahmen zur Fixierung des Dichtringes hinzukommen, die bei der Erläuterung dieser Figuren noch beschrieben werden.

Es ergibt sich jedenfalls, daß durch die mit Abstand zueinander angeordneten Klemmstellen des oder der Klemmeinsätze nicht nur eine Verbesserung der Fixierung und eine Kammerung des aufgebauchten Schlauch-Werkstoffes, sondern erforderlichenfalls zusätzlich eine Kammerung eines Dichtringes in der Weise möglich ist, daß dessen Werkstoff nicht im Laufe der Jahre aufgrund des Anpreßdruckes wegkriechen kann.

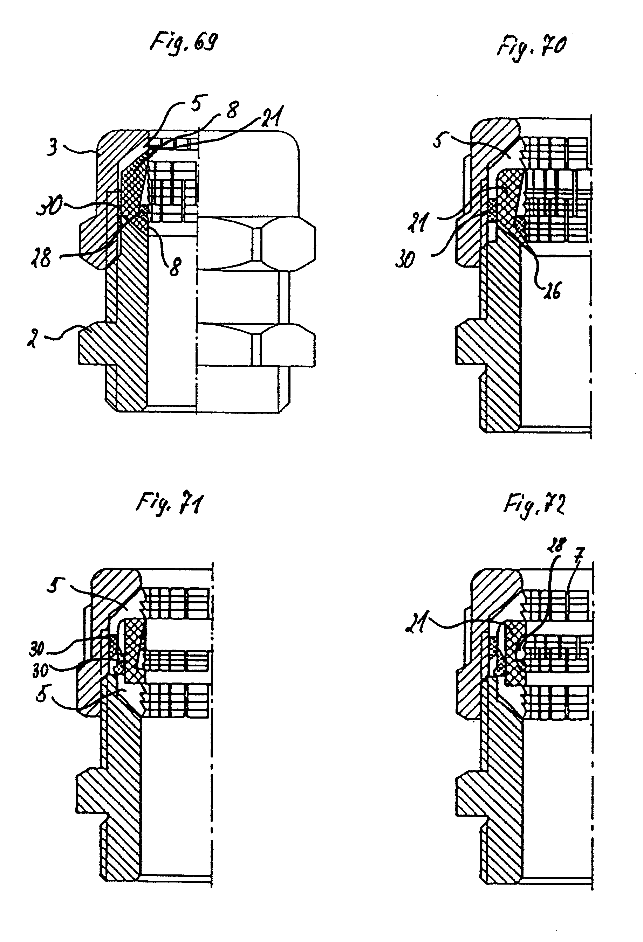

Weitere Beispiele mit gekammerten Dichtungen sind die Ausführungsformen nach Fig. 69 bis 76, wobei die Dichtringe 21 in noch zu beschreibender Weise weitere Ausgestaltungen aufweisen können. Weitere Abdichtmöglichkeiten mit einer in den Hohlraum zwischen den beiden Klemmstellen eingreifenden Dichtung 21 werden anhand der Fig. 12 oder auch 24 und 25, 47 und 48, 51 und 55 bis 57 deutlich.

Eine weitere oder zusätzliche Möglichkeit der Verbesserung der Abdichtung kann darin bestehen, daß in axialer Richtung neben den Klemmeinsätzen 5, seien sie aus zwei Teilen oder einstückig verbunden, eine Dichtung 23 angeordnet sein kann, welche durch Anziehen der Gegenhülse 3 von dem Klemmeinsatz 5 zusammendrückbar ist. Eine derartige Dichtungsanordnung ist beispielsweise in Fig. 10, 17, 18, 19 sowie 47 bis 57 angedeutet, wobei zum Teil eine Kombination eines solchen axial neben dem Klemmeinsatz 5 mit zwei Klemmstellen 8 befindlichen Dichtringes mit einem zwischen den Klemmstellen befindlichen Dichteinsatz 21 - z. B. in Fig. 48 oder Fig. 16 in noch zu beschreibender Weise vorgesehen ist. Fig. 19 wurde schon als Beispiel für eine zwischen zwei Klemmstellen gekammerte Dichtung erwähnt, wobei hier der Sonderfall vorgesehen ist, daß dieser Dichtring zwar zwischen zwei Klemmstellen liegt, gleichzeitig aber axial neben den beiden Klemmstellen der einstückig verbundenen Klemmeinsätze 5 angeordnet ist.

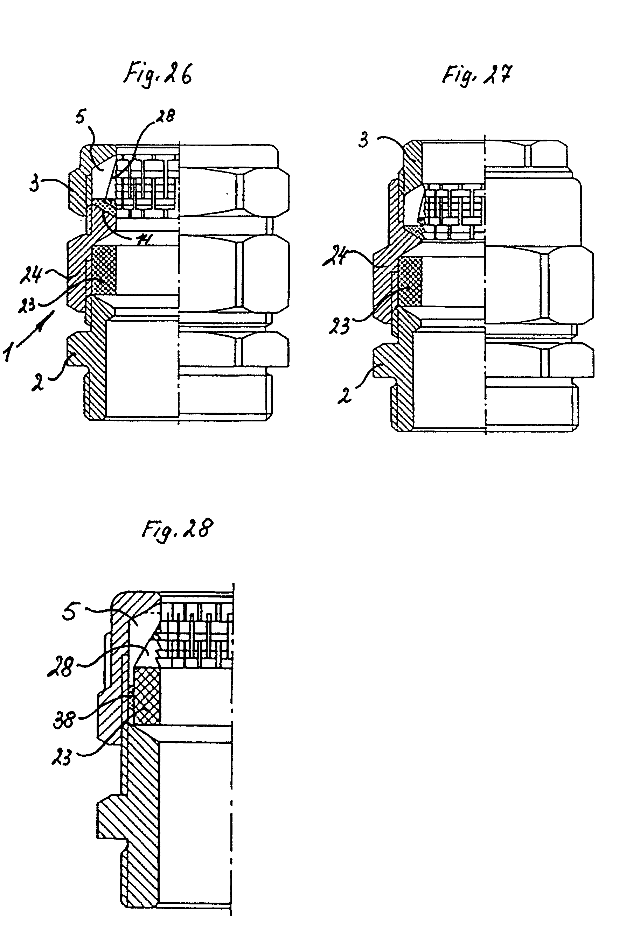

Schließlich zeigen die Figuren 11, 26 und 27 eine Kabelverschraubung 1, bei welcher zwischen den Klemmeinsätzen 5 und dem axial daneben angeordneten Dichtungseinsatz 23 eine Verbindungshülse 24 angeordnet ist, welche auf der den Klemmeinsätzen 5 zugewandten Seite zur Verformung derselben dient und einen entsprechenden Innenkonus 14 hat und ferner einen Anschluß, insbesondere ein Gewinde für die Gegenhülse 3 aufweist, während die axial gegenüberliegende Seite zur Verformung der Dichtung dient und einen Anschluß für die Schraubhülse 2 aufweist, so daß die Klemmeinsätze 5 und die Dichtung 23 unabhängig voneinander verformbar sind. Dabei ist anhand der Figuren 26 und 27 gleichzeitig erkennbar, daß die Gegenhülse 3 entweder eine Überwurfmutter oder ein Einschraubstutzen sein kann.

Durch die erfindungsgemäße Ausgestaltung der Klemmeinsätze 5 mit zwei Klemmstellen und einem Abstand dazwischen ist es ferner möglich, daß die Dichtung 21 zwischen dem oder den Klemmeinsätzen 5 bzw. deren Klemmstellen 8 und dem Kabel 6 oder Schlauch, wie schon beschrieben, angeordnet ist oder im axial benachbarten Bereich des Klemmeinsatzes 5 sich an der Innenseite der Schraubhülse 2 - z. B. bei 14 oder 31 - abstützt und durch den Klemmeinsatz 5 hindurch über eine oder mehrere Klemmstellen 8 hinweggeführt ist, so daß die Dichtung zwischen Kabel 6 und Klemmstelle 8 festgeklemmt eine Beschädigung der Kabeloberfläche durch den Klemmeinsatz an dieser Stelle 8 verhindert. Beispiele dafür sind die Figuren 12 mit einer in dem Hohlraum 9 befindlichen Dichtung 21 und zwei seitlichen Fortsetzungen 25 zur Abschirmung der Klemmstellen 8, Fig. 16 mit einer axial neben dem Klemmeinsatz angeordneten Dichtung 23 und einer unter beide Klemmstellen ragenden Fortsetzungsabschirmung 25, Fig. 47 und 48, die bezüglich der Dichtung 23 und ihrer Fortsetzung 25 weitgehend der Ausführungsform nach Fig. 16 entspricht, Fig. 49 und 50, bei welcher die Fortsetzung 25 des Dichtringes 23 nur unter die unmittelbar benachbarte Klemmstelle 8 reicht, und Fig. 51 sowie 55 bis 57, bei welcher der Dichtring 23 und seine Fortsetzung 25 praktisch eine gleichbleibende Dicke haben.

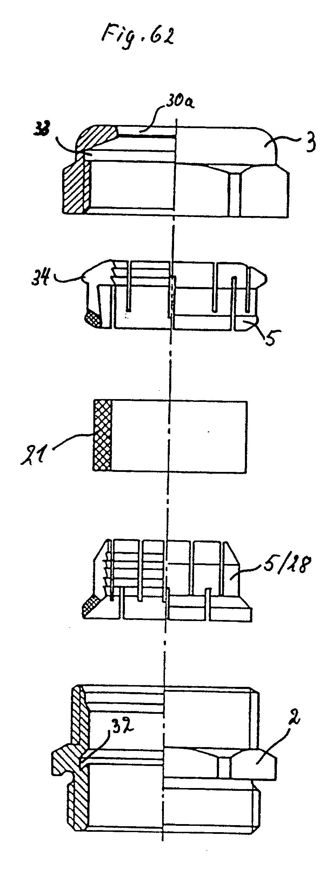

Bei den vorerwähnten Beispielen gemäß Fig. 12, 16 oder auch 47 bis 50 hat der Dichtungseinsatz 21 bzw. 23 zumindest an einer Stirnseite eine stufenförmige Absetzung, die in die erwähnte Fortsetzung 25 übergeht und, wie erwähnt, wenigstens eine Klemmstelle 8 des Klemmeinsatzes 5 übergreift, so daß die Kabeloberfläche an dieser Stelle nicht durch den Klemmeinsatz 5 beschädigt werden kann und trotzdem der Dichteinsatz 21 oder 23 durch diese Kammerung bei Zugbelastung des Kabels 6 besser standhält. Dabei kann gemäß den Figuren 55 bis 57, 61 und 73 bis 76 die der Gegenhülse 3 abgewandte Stirnseite des ganz oder teilweise durch die Klemmstellen 8 hindurchgeführten Dichtungseinsatzes 21 oder 23 als gegen das Kabel 6 oder den Schlauch gerichtete Dichtlippe 26 ausgebildet und verlängert sein, wobei dies vor allem für die Figuren 55 bis 57 und 73 bis 76 zutrifft, während gemäß Fig. 61 wenigstens ein Klemmeinsatz 5 eine Dichtlippe 26 zwischen seiner Stirnseite und der sie beaufschlagenden Hülse 2 aufnehmen und einklemmen kann. Diese Dichtlippe 26 stellt dabei eine Verbesserung der Abdichtung, aber auch der Isolierung dar.

Die schon in anderem Zusammenhang erwähnten Figuren 12 bis 14 und 71 und 72 zeigen außerdem eine Ausgestaltung der erfindungsgemäßen Kabelverschraubung 1, wonach die beiden einen Abstand voneinander einhaltenden und eine Aufbauchung 11 des Kabels 6 und/oder eine dort angeordnete Dichtung 21 aufnehmenden Hohlraum 9 zwischen sich aufweisenden Klemmeinsätze 5 voneinander getrennt sind und an den einander zugewandten Stirnseiten 12 einen durch die Verschraubung von Schraubhülse 2 und Gegenhülse 3 verringerbaren oder gar verschließbaren Abstand aufweisen, wobei sie gemäß Fig. 12 sowie 71 und 72 sogar teleskopartig und relativ zueinander verschiebbar übereinandergreifen können. Dabei wird also jeder Klemmeinsatz 5 zunächst separat beaufschlagt und radial zusammengedrückt, gleichzeitig aber auch in axialer Richtung gegen den anderen hin verschoben oder sogar an dem anderen während dieser Verschiebebewegung geführt.

In mehreren Ausführungsbeispielen ist ein Klemmeinsatz mit einer flachen Schräge an seiner Außenseite vorgesehen, der entweder einen der Klemmeinsätze 5 bildet oder aber zusätzlich als ein weiterer Klemmeinsatz vorgesehen ist und in den Ausführungsbeispielen, die einen solchen Klemmeinsatz mit flacher Schräge an der Außenseite zeigen, als Klemmeinsatz 28 bezeichnet ist. Die mit einer flachen Schräge versehene Außenseite 29 dieses Klemmeinsatzes 28 fällt unter einem spitzen Winkel vom größten Durchmesser gegen die Kabeloberfläche hin ab, wobei die Neigung der Schräge der Außenseite 29 gegen die Öffnung 30a der Gegenhülse 3 hin gerichtet ist, so daß bei einem Zug an dem von diesem Klemmeinsatz 28 beaufschlagten Kabel dieser Klemmeinsatz 28 dem Kabel folgen möchte, aufgrund der flachen Schräge aber dann umso stärker gegen das Kabel gepreßt wird. So bildet dieser Klemmeinsatz 28 aufgrund seiner äußeren Formgebung einen selbsthemmenden Zugentlastungseinsatz. Dabei kann dieser Klemmeinsatz 28 mittelbar oder unmittelbar mit der Gegenhülse 3 und/oder der Schraubhülse 2 zusammenwirken.

Ein solcher "selbsthemmender" Klemmeinsatz 28 ist beispielsweise in den Figuren 20 bis 23, aber auch in den Figuren 59 bis 65 - bei letzteren als einer der beiden Klemmeinsätze 5 - vorgesehen.

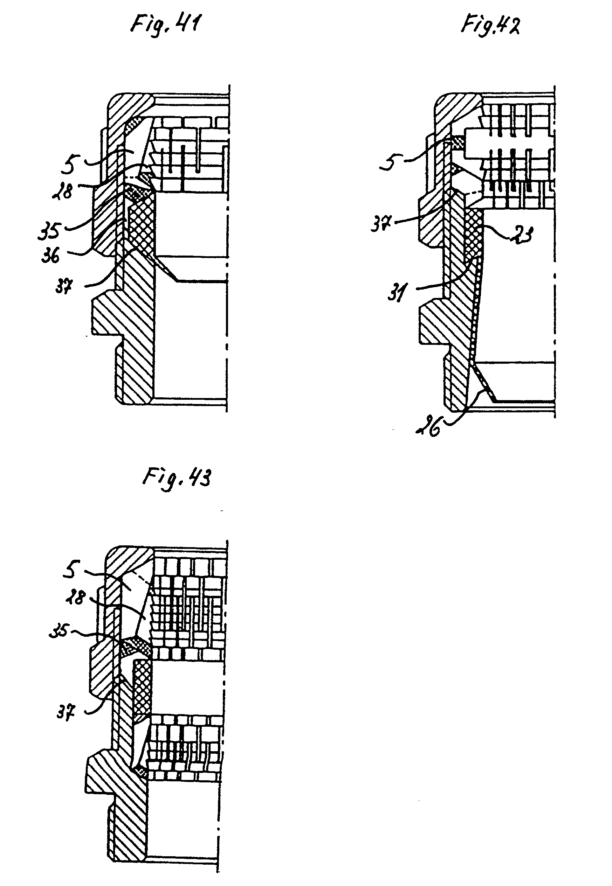

Gemäß den Figuren 69 bis 76 kann im Inneren der von den beiden einen Hohlraum 9 zwischen sich freilassenden Klemmeinsätzen 5 beaufschlagten Dichtung 21 oder beispielsweise gemäß den Figuren 41, 43, 46 und 22 kann in mindestens einem der Klemmeinsätze 5 ein solcher zusätzlicher radial nachgiebiger, beidseitig mit Axialschlitzen 7 versehener Einsatz 28 mit spitzwinkligem selbsthemmendem Konus an der Außenseite 29 als zusätzliche Zugentlastung vorgesehen sein. Dabei kann dieser Zugentlastungseinsatz 28 mit einer (z. B. Fig. 38, 69, 70, 71, 41) oder zwei (Fig. 73) flachen Schrägen oder Rundungen (Fig. 72 und 74) an seiner Außenseite 29 vorgesehen sein, welcher sich in einem Klemmeinsatz oder in dem Dichteinsatz 21 befindet. Bei zwei nach beiden Seiten etwa gleichmäßig abfallenden flachen Schrägen oder entsprechenden Rundungen kann dieser Zugentlastungseinsatz 28 bei Zugkräften nach beiden Richtungen am Kabel 6 selbsttätig bzw. selbsthemmend wirksam werden.

Ist der Zugentlastungseinsatz 28 von einem Klemmeinsatz 5 umfaßt, kann dieser beidseitig versetzte und sich in axialer Richtung überlappende Schlitze aufweisen, welche ein paralleles Zusammenpressen der beiden Einsätze ermöglichen. Dadurch wird eine einseitige Klemmung vermieden und die selbsthemmende Form des Zugentlastungseinsatzes 28 bleibt aufrechterhalten und wirksam.

Beispielsweise in Fig. 22 und 73 ist dargestellt, daß der selbsthemmende Zugentlastungseinsatz 28 an seiner der Kabel- oder Schlauchoberfläche zugewandten und zum Festhalten des Kabels 6 oder des Schlauches beliebig geformten, vorzugsweise gezahnten Innenwandung einen zwischen zwei Klemmstellen befindlichen Hohlraum 27 aufweisen kann, welcher bei der Kabeleinschnürung wiederum erfindungsgemäß eine Aufbauchung der Kabel- oder Schlauchoberfläche ermöglicht, diese in sich aufnimmt und bei Zugbelastung immer stärker umschließend festhält. Beim Beispiel der Fig. 22 kann man den Zugentlastungseinsatz 28 also praktisch als die beiden einstückig verbundenen erfindungsgemäßen Klemmeinsätze 5 ansehen, wobei aber auch noch ein weiterer Klemmeinsatz an der Außenseite dieses Zugentlastungseinsatzes 28 oder aber eine zusammenpreßbare Dichtung wirksam ist.

Die Kabelverschraubung 1 kann wenigstens teilweise aus Kunststoff bestehen und es kann zumindest ein Klemmeinsatz 5 einstückig an der Schraubhülse 2 und/oder der Gegenhülse 3 angeformt sein. Ein Ausführungsbeispiel dieses Gedankens ist in Fig. 58 dargestellt. Dort ist vorgesehen, daß die Schraubhülse 2 aus Kunststoff besteht und ein der Gegenhülse 3 zugewandter ringförmiger Bereich der Schraubhülse 2 als einstückig mit dieser verbundener Klemmeinsatz 5 ausgebildet und mit Schlitzen 7 versehen ist und für eine radiale Verformung dieses geschlitzten Bereiches nach innen einen konischen Stirnbereich zum Zusammenwirken mit der Gegenhülse 3 oder einem Bereich des von der Gegenhülse 3 beaufschlagten zweiten Klemmeinsatz 5 - diese Wirkungen jeweils im Ausführungsbeispiel nur mittelbar - oder, wie im Ausführungsbeispiel vorgesehen, zum Zusammenwirken mit dem Dichtring 21 aufweist. Wird die Gegenhülse 3, in diesem Fall eine Überwurfmutter, auf die Schraubhülse 2 fester aufgeschraubt, wird einerseits aufgrund des Innenkonus 15 der Gegenhülse 3 der dort unmittelbar beaufschlagte Klemmeinsatz 5 radial verformt, gleichzeitig aber auch axial etwas verschoben, wodurch der Dichtring 21 auf die konische Außenseite des zweiten Klemmeinsatzes 5 aufgeschoben und dadurch dieser ebenfalls radial verformt wird.

Sowohl bei der vorerwähnten Fig. 58 als auch den Figuren 59 bis 61 sowie Fig. 13 und 14 ist ferner vorgesehen, daß die beiden mit Abstand zueinander angeordneten Klemmeinsätze 5 auch in verschraubter und klemmender Position an den einander zugewandten Stirnseiten 12 - beispielsweise im Gegensatz zu dem Ausführungsbeispiel nach Fig. 2 oder 12 - einen dann verringerten Abstand behalten, in den der durch das Verschrauben zusammengepreßte und verformte Dichtring 21 durch seine Stauchung und Verformung radial nach außen ragt und den gesamten Querschnitt abdichtet.

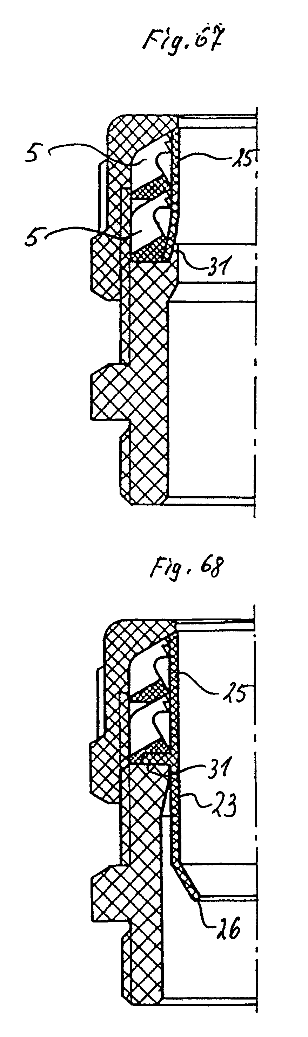

Fig. 66 ist ein Beispiel dafür, daß bei einer Herstellung der Schraubhülse 2 und der Gegenhülse 3 aus Kunststoff jedem dieser Teile ein Klemmeinsatz 5 einstückig angeformt sein kann, wobei diese Klemmeinsätze aber auch bei diesen Ausführungsformen lose an entsprechenden Absätzen der Hülsen eingelegt und eingeklemmt sein könnten.

Anhand der Fig. 19 wurde bereits erwähnt, daß wenigstens drei Klemmstellen 8 vorgesehen sein können, deren zwei zwischen sich den freibleibenden oder auch eine Dichtung od. dgl. aufnehmenden Hohlraum 9 haben, während zwischen diesen beiden Klemmstellen und der mindestens dritten Klemmstelle ein Hohlraum mit einer darin angeordneten Dichtung 23 vorgesehen sein kann. Ein weiteres Beispiel dafür ist Fig. 43, bei welcher die beidseits des Dichtringes 23 angeordneten Klemmstellen ihrerseits in dem Hohlraum wiederum einen selbsthemmend en Entlastungseinsatz 28 haben. Es kann jedoch auch mit z. B. drei Klemmstellen eine Anordnung gemäß Fig. 35 gewählt werden, bei welcher zwischen den beiden einen Hohlraum bildenden Klemmstellen in diesem Hohlraum ein weiterer Klemmeinsatz 28 angeordnet ist, der aber zwischen sich und den beiden Klemmstellen 8 Zwei Teil-Hohlräume 8a freiläßt, was zu der guten Befestigung gemäß Fig. 36 führt.

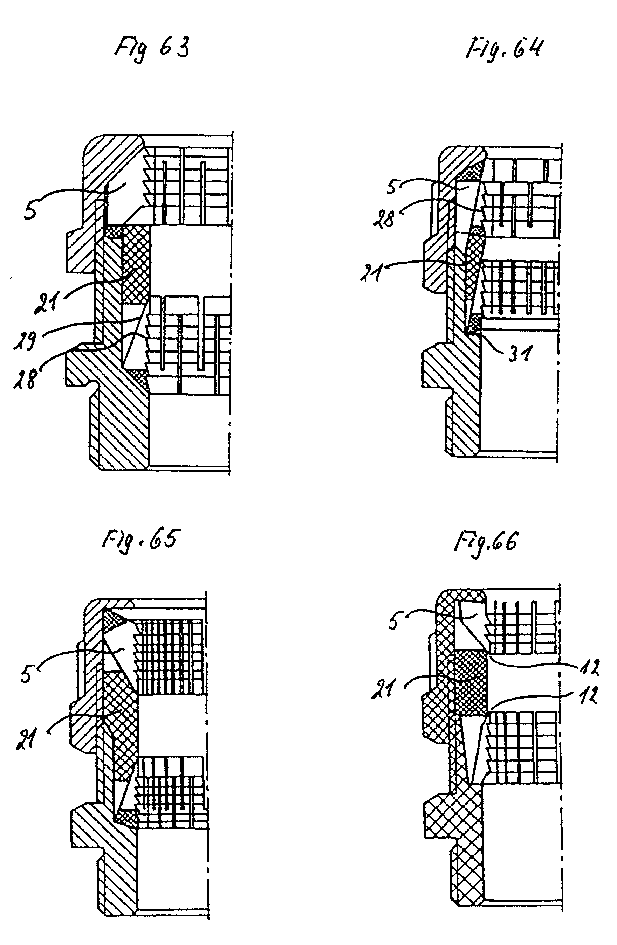

Bei den acht Ausführungsbeispielen gemäß den Figuren 58 bis 66 ist vorgesehen, daß die zwischen zwei Klemmeinsätzen 5 oder Klemmstellen 8 angeordnete und gekammerte Dichtung 21 zumindest beim Anziehen der Verschraubung 1 mit wenigstens einem ihrer stirnseitigen Enden auf die Außenseite wenigstens eines der Klemmeinsätze 5 schiebbar ist und dabei diesen Klemmeinsatz radial gegen das Kabel hin verformt. Zumindest dieser auf den Klemmeinsatz aufgeschobene Randbereich der Dichtung ist erst recht nicht der Gefahr eines Davonkriechens ausgesetzt. Dabei kann die Dichtung schon vor dem Anziehen der Verschraubung mit diesem stirnseitigen Bereich auf der Außenseite wenigstens eines der Klemmeinsätze aufliegen. Fig. 65 ist ein Beispiel, wo die Dichtung mit beiden Randbereichen auf beiden Klemmeinsätzen außen aufliegt. Die Beispiele gemäß Fig. 58 bis 61 zeigen, daß die Dichtung 21 die Außenseite des zweiten, der Gegenhülse 3 abgewandten Klemmeinsatzes 5 beaufschlagen und auf diesen aufschiebbar sein können.

Auch in Fig. 66 ist demgegenüber vorgesehen, daß die Dichtung 21 auch den von der Gegenhülse 3 erfaßten oder mit dieser sogar verbundenen Klemmeinsatz 5 beim Verschrauben an dessen Außenseite übergreift und radial gegen das Kabel 6 drückt.

Sowohl in Fig. 65 als auch in Fig. 66 ist vorgesehen, daß die beiden Klemmeinsätze 5 an den einander zugewandten Stirnseiten 12 voneinander weg nach außen gerichtete Schrägen haben, an welchen jeweils ein stirnseitiges Ende der zwischen diesen beiden Klemmeinsätzen 5 angeordneten Dichtung 21 angreift und beim Anziehen der Gegenhülse 3 aufschiebt und dadurch auch die Klemmeinsätze 5 beide radial gegen das Kabel 6 verformt.

In Fig. 60 erkennt man noch, daß der in der Schraubhülse 2 angeordnete Klemmeinsatz 5 eine die Innenwandung der Schraubhülse 2 auskleidende Fortsetzung 30 hat, so daß dieser Klemmeinsatz 5 eine zusätzliche Funktion erhält, indem er insbesondere eine aus Metall bestehende Schraubhülse zusätzlich isoliert.

Die Figuren 59 bis 65 zeigen ferner, daß die gegebenenfalls aus Metall bestehende Schraubhülse 2 einen radialen oder schrägen Absatz 31 (Fig. 61 bis 65) oder eine radiale oder schräge Ringnut 32 (Fig. 59 und 60, gegebenenfalls 61) aufweisen kann, an der sich der eine Klemmeinsatz 5 mit einer seiner Klemmstelle 8 abgewandten Stirnseite abstützt und/oder eingerastet ist.

Ferner zeigen die Figuren 58 bis 61 eine Ausgestaltung insbesondere an der Gegenhülse, wonach nämlich die verschraubbare Gegenhülse 3 im Bereich ihrer stirnseitigen konischen Ringfläche 15 eine Freidrehung 33 ihres Innengewindes und der an dieser Stelle vorgesehene Klemmeinsatz 5 einen in diese Freidrehung 33 ragenden, insbesondere dere einstückigen Außenring 34 aufwe ist. Dabei verläuft die stirnseitige Ringfläche 15 der Gegenhülse 3 im Bereich der Freidrehung 33 bis auf deren Grund konisch schräg, so daß der Klemmeinsatz auch an seinem Außenring 34 im Sinne einer Einklemmung beaufschlagt wird, wenn die Gegenhülse 3 auf die Schraubhülse 2 aufgeschraubt wird. Die im Querschnitt runde Form des Außenringes erlaubt dabei eine gewisse Abwälzbewegung des Klemmeinsatzes bei seiner radialen Verformung.

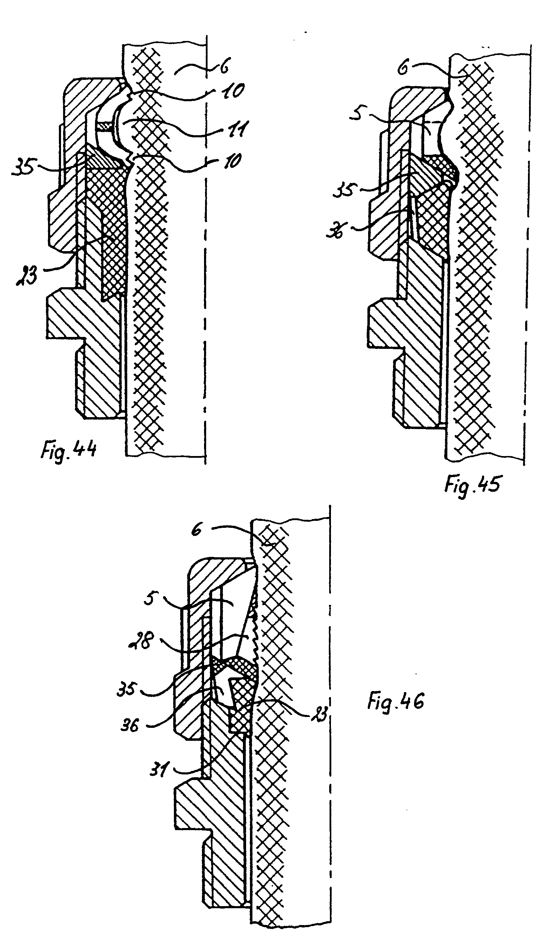

Das Zusammenwirken der Klemmeinsätze 5 mit der Schraubhülse 2 kann je nach Ausbildung der Klemmeinsätze 5 oder auch dieser benachbarter Dichtungen 23 mit oder ohne weiterer Klemmeinsätzen dadurch verbessert sein, daß im Inneren der Schraubhülse 2 an der der Gegenhülse abgewandten Stirnseite 13 des Klemmeinsatzes 5 ein Gegendruckring 35 zum radialen Verformen des ihm zugewandten geschlitzten Bereiches des Klemmeinsatzes 5 (beispielsweise bei der Ausführungsform nach Fig. 52 und 53 oder 37 und 39) und/oder eines Dichteinsatzes (beispielsweise gemäß Fig. 37) vorgesehen sein. Der Gegendruckring 35 beaufschlagt dabei mit seiner dem Klemmeinsatz 5 abgewandten Stirnseite eine sich axial anschließende Dichtung 23 und verformt diese beim Anziehen der Gegenhülse 3 in deren Dichtstellung, wie es beispielsweise in den Figuren 18, 37 oder 39 und ferner auch in Fig. 44 und 45 in Gebrauchsstellung dargestellt ist.

Bei den Ausführungsbeispielen nach Fig. 18 und 39 übergreift dabei der Gegendruckring 35 die Dichtung 23 an deren Außenseite mit einer hülsenartigen Fortsetzung 36 und schirmt dadurch gegenüber dem Gewinde der Gegenhülse 3 ab.

Weitere Beispiele von Gegendruckringen 35 zeigen die Figuren 40 bis 43. Dabei kommt jedoch als zusätzliche Ausgestaltung hinzu, daß der Gegendruckring 35 geschlitzt ist und unter Einwirkung einer Schrägfläche 37 bevorzugt an der Schraubhülse 2 gleichzeitig radial gegen einen von ihm teilweise übergriffenen Bereich des Dichtringes 23 verformbar ist. In diesem Falle bildet der den Dichtring 23 an der Stirnseite und im Randbereich an der Außenseite umgreifende und somit in diesem Bereich kammernde Gegendruckring 35 praktisch einen weiteren Klemmeinsatz, der die Dichtwirkung verbessert und ein Wegkriechen von Dichtungswerkstoff erschwert bzw. vermeidet.

Fig. 43 zeigt eine Kombination mehrerer der vorbeschriebenen Maßnahmen und Merkmale, indem nämlich ein einerseits zwischen zwei gegebenenfalls einstückigen Klemmeinsätzen 5 und andererseits einem dritten Klemmeinsatz angeordneter Dichtring 23 an wenigstens einer seiner Stirnseiten von einem Gegendruckring 35 beaufschlagt ist, der seinerseits an einem der Klemmeinsätze 5 anliegt.

Entsprechend gut ist in diesem Falle der Dichtring 23 gekammert und eingeklemmt.

In den Figuren 47 bis 50 und in gewisser Weise auch in den Figuren 74 und 54 sowie in einer abgewandelten Form in den Figuren 52 und 53 ist vorgesehen, daß der außerhalb der beiden gegebenenfalls einstückig verbundenen oder auch getrennten Klemmeinsätze 5 in Fortsetzung des inneren schraubenhülsenseitigen Klemmeinsatzes 5 angeordnete Dichtring 23 von einer äußeren Fortsetzung 38 des Klemmeinsatzes 5 an seiner Außenseite übergriffen und gegenüber dem Gewindebereich der Kabelverschraubung 1 abgeschirmt ist, wobei diese Fortsetzung 38 gegebenenfalls auch einstückig mit der Schraubhülse 2 verbunden sein kann. Dabei besteht in den Figuren 52 und 53 die Besonderheit, daß diese Fortsetzung nicht unmittelbar mit den Klemmeinsätzen 5 verbunden ist, also diese nur im übertragenen Sinne bzw. mittelbar fortsetzt.

Es sei noch erwähnt, daß in den Figuren 29 bis 36 Hülse und Gegenhülse als zwei praktisch einander zugewandte Ringe ausgebildet sind, die durch axiale Schrauben 4 zusammengeführt und dadurch verklemmt werden können.

Dabei sitzt ein äußerer Ring 40 einstückig an einem Gewindeansatz 42, während zwischen diesen beiden Teilen ein axial bewegbarer Zwischenring 43 angeordnet ist, der durch die Zwischenräume der Verbindungsstege 44 eingelegt werden kann, zumal er an seinem Umfang gemäß Fig.30 und 31 unterbrochen ist und von einer der Schrauben 4 an seiner Unterbrechung in Gebrauchsstellung zusammengehalten wird. Werden die Schrauben 4 angezogen, wird der Ring 43 gegen den Ring 40 gezogen, so daß die Innenkonusse der beiden Ringe 40 und 43 in gleicher Weise auf die Klemmeinsätze 5 einwirken, wie dies beim Zusammenwirken der Schraubhülse 2 mit der Gegenhülse 3 bei den übrigen Ausführungsbeispielen der Fall ist. Die entsprechende Klemmstellung ist in Fig. 36 dargestellt. Dabei erkennt man dort, daß der Schraubansatz 42 seinerseits in eine weitere Hülse 45 mit einem axial benachbarten Dichtring 23 eingreifen kann, um die Abdichtung dieser Kabelverschraubung entsprechend zu verbessern.

Anhand der Gesamtheit der dargestellten Ausführungsbeispiele erkennt man, daß die vorbeschriebenen Merkmale und Maßnahmen in unterschiedlichster Weise je nach Anforderungen an Dichtigkeit und Klemmkraft kombiniert sein können, wobei weitere Kombinationen und Variationen der einzelnen Klemmeinsätze und inneren oder äußeren Dichtungen sowie der Zugentlastungseinsätze möglich sind. Beispielsweise kann auch bei der Ausführungsform nach Fig. 35 im Inneren des Dichtringes 23 ein selbsthemmender Klemmeinsatz 28 angeordnet werden. Dies ist auch bei sonstigen derartigen Dichtringen 23 bei anderen Ausführungsbeispielen möglich. Darüber hinaus könnte auch in dem einen oder anderen Fall ein zusätzlicher Druckring vorgesehen werden.

Bei all diesen Variationen und Kombinationen ergibt sich jedoch eine Kabelverschraubung mit einer dauerhaften Klemmwirkung, bei welcher der eingeklemmte und eingeschnürte Bereich des Kabels oder auch ein gekammerter Dichtungsring auch nach langen Jahren nicht in dem Maße davonkriechen kann , daß die Kabelverschraubung 1 gelockert wird.

Bezüglich der Ausbildung des Druckringes 35 sind einige Möglichkeiten und Maßnahmen vor allem in den Figuren 24, 25 sowie 54 bis 57 erkennbar, die vor allem dazu dienen, den Klemmeinsatz 5 gezielt radial zu verformen, also die Verformung dieses Klemmeinsatzes 5 gewissermaßen vorzuprogrammieren.

Bei allen Ausführungsformen der Figuren 54 bis 57 erkennt man dabei, daß in der Gegenhülse 3 eine Absetzung 47 mit oder ohne Hinterschneidung der Innenwandung der Gegenhülse 3 vorgesehen ist. An dieser liegt der Druckring 35 früher oder später an.

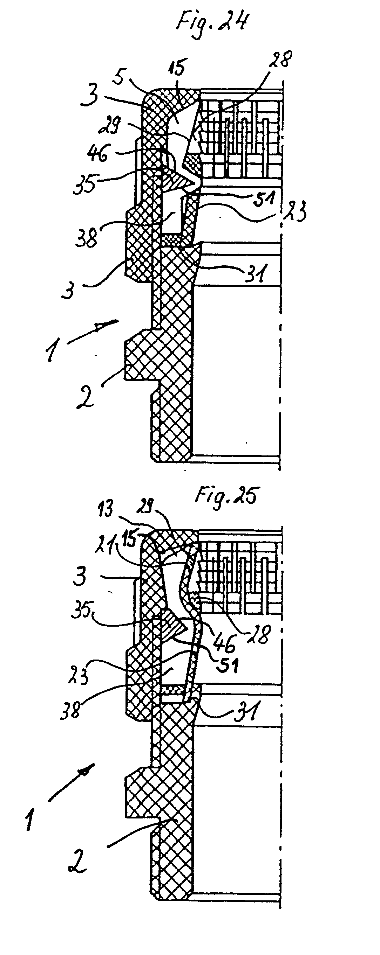

In Fig. 25 und 54 ist dabei eine Ausführungsform dargestellt, bei welcher der Druckring 35 bereits in Ausgangslage an dieser Absetzung 47 anliegt. Der Druckring 35 greift dabei, wie bereits erwähnt, in eine entsprechend geformte Außennut 49 der einstückigen Klemmeinsätze 38 ein, die dann beim Aufschrauben der Gegenhülse 3 im Zusammenwirken mit dem Druckkonus bzw. der Druckfläche 15 der Gegenhülse 3 in radialer Richtung verformt werden.

Dabei erkennt man beim Vergleich der Figuren 24, 25 und 54 bis 57 sowie gegebenenfalls weiterer Figuren, bei denen ein Druckring 35 vorgesehen ist, daß die - schräge oder gerundete - Druckfläche 15 der Gegenhülse 3 und die dieser zugewandte Druckfläche 46 des Druckringes 35 nicht nur einander entgegengesetzte Steigungen bzw. Steigungswinkel haben, sondern daß diese Steigungen und Steigungswinkel unterschiedliche Größen haben. In Fig. 54 erkennt man beispielsweise, daß die Druckfläche 46 bzw. die abgewandte Druckfläche 51 des Druckringes 35 nicht nur einander entgegengesetzte Steigungen bzw. Steigungswinkel haben, sondern daß diese Steigungen und Steigungswinkel unterschiedliche Größe haben. In Fig. 54 erkennt man beispielsweise, daß die Druckfläche 46 wesentlich steiler und die Druckfläche 51 wesentlich flacher als die Druckfläche 15 ist, während die Druckfläche 46 in Fig. 25 gerade umgekehrt ist. Durch die Wahl dieser Schrägungswinkel, die gegebenenfalls durch Versuche ermittelt werden kann, kann die radiale Verformung des Klemmeinsatzes 5 so gezielt werden, wie es erwünscht ist.

Es kann also je nach Ausbildung des Klemmeinsatzes 5, der Klemmstellen 8, einer eventuell zwischenliegenden Dichtung 21 oder eines zusätzlichen Klemmeinsatzes 28 durch die Wahl der Schrägungswinkel der Druckflächen 15, 46 und 51 dennoch die optimale Verformung des Klemmeinsatzes 5 vorprogrammiert werden.

In den Figuren 24, 55 und 56 ist eine weitere Möglichkeit der gezielten radialen Verformung des Klemmeinsatzes 5 mit Hilfe des Gegendruckringes 35 dargestellt. In diesem Falle beaufschlagt die Druckfläche 15 der Gegenhülse 3 die Druckfläche 46 des Gegendruckringes 35 beim axialen Verstellen über den Klemmeinsatz 5 und in der in diesen Figuren dargestellen Ausgangslage ist Zwischen dem Gegendruckring 35 und der Anschlag-Absetzung 47 an der Innenseite der Gegenhülse 3 ein bei axialer Verstellung sich verringernder und verschwindender Abstand 48 vorgesehen. Zunächst wird also der Klemmeinsatz 5 die von der Druckfläche 15 beim Verschrauben ausgehende Druckkraft auf den Gegendruckring 35 übertragen, ohne daß dieser Druckring 35 gleichzeitig durch die Absetzung 47 beaufschlagt und mitgenommen wird. Erst wenn die von der anderen Seite her auf den Druckring 35 wirkende Reaktionskraft die Axialkraft zum Verformen des Klemmeinsatzes 5 übersteigt, wird der Abstand 48 verschwinden, so daß dann auch die Fortsetzung 38 über die Druckfläche 51 des Druckringes 35 einer stärkeren Beaufschlagung ausgesetzt wird.

Fig. 57 zeigt schließlich eine andere Möglichkeit der gezielten radialen Verformung des Klemmeinsatzes 5, wobei der in die Außennut 49 des gegebenenfalls einstückig mit der Schraubhülse 2 verbundenen Klemmeinsatzes 5 eingreifende Gegendruckring 35 in Ausgangslage an der Absetzung 47 anliegt und zwischen der Druckfläche 13 des Klemmeinsatzes 5 und der inneren Druckfläche 15 der Gegenhülse 3 ein Abstand 48 vorgesehen ist. In diesem Falle wird zuerst der Bereich 38 über die Druckfläche 51 des Druckringes 35 axial und radial verformt, wobei die Klemmstelle 8 im Bereich des Gegendruckringes 35 bereits radial verstellt werden kann, wodurch dann auch die zweite Klemmstelle 8 radial nach innen drückt.

**Patentansprüche**

1. Kabelverschraubung (1) für isoliertes Kabel (6) oder Schutzschlauch mit einer Schraubhülse (2) einer damit vorzugsweise mittels Gewinde verbindbaren Gegenhülse (3) und mit einem damit oder dadurch gegen das Kabel (6) oder einen Schutzschlauch preßbaren Klemmeinsatz (5, 28) aus härterem Werkstoff als der Kabelmantel, wobei die Gegenhülse (3) od. dgl. den Klemmeinsatz außen und mit einer Ringfläche zumindest an der Stirnseite übergreift und beim Anziehen des Gewindes mit einer sich verjüngenden Form, z. B. mittels eines Konus (14, 15) einen mit axialen, an der Stirnseite (13) mündenden Schlitzen (7) versehenen Bereich des Klemmeinsatzes (5) radial gegen das Kabel (6) hin verformt, das Kabel so festlegt und mittelbar oder unmittelbar abdichtet, **dadurch gekennzeichnet,** daß wenigstens zwei zumindest radial nachgiebige Klemmeinsätze (5) vorgesehen sind, deren Klemmstellen (8) axial mit Abstand nebeneinander am Kabel (6) oder Schlauch angreifen und zwischen sich einen Hohlraum (9) aufweisen und daß in Gebrauchsstellung eine durch die beim Klemmen entstehenden Einschnürungen des Kabels (6) oder Schlauches gebildete Aufbauchung (11) in dem Hohlraum (9) eingekammert ist.

2. Kabelverschraubung nach Anspruch 1, dadurch gekennzeichnet, daß die beiden Klemmeinsätze (5) an ihren einander zugewandten Stirnseiten ebene bzw. innen- und außenkonische Stirnflächen (12) aufweisen, welche über die äußeren Stirnflächen (13) von beaufschlagenden Innenkonusse (14, 15) der Schraub- und Gegenhülse zum radialen Zusammenpressen ihrer geschlitzten Bereiche beim Anziehen der Gegenhülse in axialer und radialer Richtung zusammendrückbar sind.

3. Kabelverschraubung nach Anspruch 1 oder 2, dadurch gekennzeichnet, daß die beiden Klemmeinsätze (5) einstückig verbunden sind.

4. Kabelverschraubung nach Anspruch 3, dadurch gekennzeichnet, daß die beidseitigen, jeweils nach einer Stirnseite (13) hin randoffenen Schlitze (7) der einstückig verbundenen Klemmeinsätze (5) jeweils in axialer Richtung über die eine Hälfte des Klemmeinsatzes (5) hinaus bis in die andere Hälfte verlaufen, so daß sich die geschlossenen Endbereiche der Schlitze (7) überlappen.

5. Kabelverschraubung nach einem der Ansprüche 1 bis 4, dadurch gekennzeichnet, daß die einstückig verbundenen Klemmeinsätze (5) eine Abstützung (16) gegenüber der Innenseite der Schraubhülse (2) und/oder der Gegenhülse (3) aufweisen, insbesondere etwa in ihrer gemeinsamen Mitte.

6. Kabelverschraubung nach einem der Ansprüche 3 bis 5, dadurch gekennzeichnet, daß als Abstützung (16) an dem Klemmeinsatz (5) ein etwa ringförmiger Vorsprung mit einem Außengewinde vorgesehen ist, das zu dem Innengewinde der ein Außengewinde der Schraubhülse (2) übergreifenden Gegenhülse (3) paßt und beim Anziehen der Verschraubung von dem Innengewinde der Gegenhülse (3) erfaßt und beaufschlagt ist.

7. Kabelverschraubung nach einem der Ansprüche 1 bis 6, dadurch gekennzeichnet, daß die innere Ringfläche (15) der Gegenhülse (3) und/oder die mit dieser über die Klemmeinsätze (5) zusammenwirkende Gegenfläche (14) der Schraubhülse (2), zwischen welchen Flächen die aus zwei einzelnen Stücken oder einstückigen Klemmeinsätze (5) angeordnet sind, von außen nach innen derart schräg bzw. konisch, gewölbt oder gerundet verlaufen, daß sie in ihrem Inneren näher ihrer Mittelachse einen größeren Abstand zueinander haben als an ihren Außendurchmessern, und daß die Klemmeinsätze (5) an ihren mit diesen Ringflächen (14, 15) zusammenwirkenden Stirnseiten (13) vorzugsweise auf diese Ringflächen abgestimmt und insbesondere geschlitzt sind.

8. Kabelverschraubung nach einem der Ansprüche 1 bis 7, dadurch gekennzeichnet, daß die in axialer Richtung verlaufenden und stirnseitig offenen Schlitze (7) der Klemmeinsätze (5) in radialer Richtung schräg verlaufen.

9. Kabelverschraubung nach einem der Ansprüche 1 bis 8, dadurch gekennzeichnet, daß die Schlitze (7) der Klemmeinsätze (5) wenigstens in einem der durch Konus radial verformbaren Bereiche, vorzugsweise im Bereich der Gegenhülse (3) insbesondere an der Innenseite mit einer dünnen, nachgiebigen, einstückigen Haut (20) verschlossen sind.

10. Kabelverschraubung nach einem der Ansprüche 1 bis 9, dadurch gekennzeichnet, daß die Schlitze des zweiten Klemmeinsatzes bzw. der zweiten Klemmstelle vorzugsweise im Bereich der Schraubhülse (2) insbesondere an der Außenseite des Klemmeinsatzes von einer einstückig verbundenen, dünnen und nachgiebigen Haut (20) verschlossen sind.

11. Kabelverschraubung nach einem der vorstehenden Ansprüche, dadurch gekennzeichnet, daß die vorzugsweise einstückig verbundenen Klemmeinsätze mit an einem Klemmbereich nach außen und an dem anderen Klemmbereich nach innen offenen und im übrigen durch eine Haut verschlossenen Schlitzen zwischen diesen beiden teilgeschlitzten Bereichen wenigstens einen radial nach außen vorstehenden Dichtungsbund haben, der insbesondere gleichzeitig als Abstützung an der Innenseite der Schraubhülse und/oder der Gegenhülse angreift.

12. Kabelverschraubung nach einem der Ansprüche 1 bis 11, dadurch gekennzeichnet, daß in dem dem Kabel oder Schlauch zugewandten Hohlraum zwischen zwei Klemmstellen (8) der Klemmeinsätze (5) wenigstens ein Dichtring (21) angeordnet oder eingeschlossen ist und daß die beiden Stirnseiten oder Stirnflächen (22) des Dichtringes (21) zumindest in Gebrauchs- bzw. Klemmstellung von den Klemmbereichen (8) des oder der Klemmeinsätze (5) teilweise oder ganz übergriffen sind.

13. Kabelverschraubung nach einem der Ansprüche 1 bis 12, dadurch gekennzeichnet, daß in axialer Richtung neben den Klemmeinsätzen (5) oder den einstückig verbundenen Klemmeinsätzen eine Dichtung (23) angeordnet ist, welche durch Anziehen der Gegenhülse (3) von den Klemmeinsätzen zusammendrückbar ist.

14. Kabelverschraubung nach einem der Ansprüche 1 bis 13, dadurch gekennzeichnet, daß sich zwischen den Klemmeinsätzen oder den einstückig verbundenen Klemmeinsätzen und dem axial daneben angeordneten Dichtungseinsatz (23) eine Verbindungshülse (24) befindet, welche auf der den Klemmeinsätzen zugewandten Seite zur Verformung derselben vorgesehen und gestaltet ist und einen Anschluß für die Gegenhülse aufweist, während die axial gegenüberliegende Seite zur Verformung der Dichtung dient und einen Anschluß für die Schraubhülse aufweist, so daß die Klemmeinsätze und die Dichtung voneinander unabhängig verformbar sind.

15. Kabelverschraubung nach einem der Ansprüche 1 bis 14, dadurch gekennzeichnet, daß die Dichtung (21) zwischen dem oder den Klemmeinsätzen (5) bzw. deren Klemmstellen (8) und dem Kabel (6) oder Schlauch angeordnet ist oder zumindest im axial benachbarten Bereich des Klemmeinsatzes bzw. des einstückig mit der Schraubhülse verbundenen Klemmsaztes sich an der Schraubhülse (2) abstützend angeordnet ist und durch den Klemmeinsatz hindurch über eine oder mehrere Klemmstellen hinweg geführt ist, so daß die Dichtung zwischen Kabel und Klemmeinsatz festgeklemmt eine Beschädigung der Kabeloberfläche durch den Klemmeinsatz an dieser Stelle verhindert.

16. Kabelverschraubung nach einem der vorstehenden Ansprüche, dadurch gekennzeichnet, daß der Dichtungseinsatz zumindest an einer Stirnseite eine stufenförmige ebene schräge oder gerundete Absetzung aufweist, welche von mindestens einer Klemmstelle eines Klemmeinsatzes im Bereich der Stufe übergriffen ist.

17. Kabelverschraubung nach einem der vorstehenden Ansprüche, dadurch gekennzeichnet, daß die der Gegenhülse (3) abgewandte Stirnseite des ganz oder teilweise durch die Klemmstellen hindurchgeführten Dichtungseinsatzes (21, 23) als gegen das Kabel (6) oder den Schlauch gerichtete Dichtlippe (26) ausgebildet und vorzugsweise verlängert ist oder mindestens ein Klemmeinsatz eine Dichtlippe zwischen seiner Stirnseite und der sie beaufschlagenden Hülse aufnimmt und einklemmt.

18. Kabelverschraubung nach einem der Ansprüche 1 bis 17, dadurch gekennzeichnet, daß als Abstützung (16) der vorzugsweise einstückig verbundenen Klemmeinsätze (5) ein radial an der Außenseite liegender Stützkragen vorgesehen ist, der mit dem Klemmeinsatz (5) über einen radial vorstehenden Ring oder Steg (17) verbunden ist und seitlich dieser Verbindung gegenüber dem Klemmeinsatz (5) einen ringförmigen Abstand (18) aufweist, in welchem die Stirnseite (19) der Schraubhülse (2) wenigstens teilweise eingreift.

19. Kabelverschraubung nach Anspruch 18, dadurch gekennzeichnet, daß die in den ringförmigen Abstand (18) unter den Stützkragen der Abstützung (16) greifende Stirnseite (19) der Schraubhülse (2) etwa schneidenförmig ausgebildet ist und sich vorzugsweise konisch verdickt.

20. Kabelverschraubung nach einem der Ansprüche 1, 2 oder 6 bis 19, dadurch gekennzeichnet, daß die beiden einen Abstand voneinander einhaltenden und eine Aufbauchung (11) des Kabels (6) und/oder eine dort angeordnete Dichtung (21) aufnehmenden Hohlraum (9) zwischen sich aufweisenden Klemmeinsätze (5) voneinander getrennt sind und an den einander zugewandten Stirnseiten (12) einen durch die Verschraubung von Schraubhülse (2) und Gegenhülse (3) verringerbaren oder verschließbaren Abstand aufweisen und/oder teleskopartig und relativ zueinander verschiebbar übereinandergreifen.

21. Kabelverschraubung nach einem der Ansprüche 1 bis 20, dadurch gekennzeichnet, daß wenigstens ein Klemmeinsatz (28) mit einer flachen Schräge an seiner Außenseite (29) vorgesehen ist, die unter spitzem Winkel vom größten Durchmesser gegen die Kabeloberfläche hin abfällt, wobei die Neigung der Schräge gegen die Öffnung (30) der Gegenhülse (3) gerichtet ist und an der Außenseite (29) dieser Schräge ein weiterer, mit der Gegenhülse (3) und/oder der Schraubhülse (2) zusammenwirkender Klemmeinsatz mit stumpfwinkligerem Konus oder Wölbung bzw. Rundung mittelbar oder unmittelbar angreift.

22. Kabelverschraubung nach Anspruch 21, dadurch gekennzeichnet, daß im Inneren der von den beiden einen Hohlraum (9) zwischen sich freilassenden Klemmeinsätzen (5) beaufschlagten Dichtung (21) oder in mindestens einem der Klemmeinsätze ein zusätzlicher radial nachgiebiger beidseitig mit Axialschlitzen (7) versehener Einsatz (28) mit spitzwinkligem selbsthemmendem Konus an der Außenseite (29) als zusätzliche Zugentlastung vorgesehen ist.

23. Kabelverschraubung nach einem der vorstehenden Ansprüche, dadurch gekennzeichnet, daß der Zugentlastungseinsatz (28) mit einer oder Zwei flachen Schrägen oder flachen Rundungen an seiner Außenseite vorgesehen ist, welcher sich in einem Klemmeinsatz oder in dem Dichteinsatz befindet.

24. Kabelverschraubung nach einem der vorstehenden Ansprüche, dadurch gekennzeichnet, daß der den Zugentlastungseinsatz umfassenden Klemmeinsatz mit stumpfwinkligeren Schrägen oder Rundungen beidseitig versetzte und sich in axialer Richtung überlappende Schlitze aufweist, welches ein schnelles paralleles, radiales Zusammenpressen der beiden Einsätze ermöglichen.

25. Kabelverschraubung nach einem der Ansprüche 1 bis 24, dadurch gekennzeichnet, daß der selbsthemmende Zugentlastungseinsatz (28) an seiner der Kabel- oder Schlauchoberfläche zugewandten und zum Festhalten des Kabels oder des Schlauches beliebig geformten Innenwandung einen zwischen zwei Klemmstellen befindlichen Hohlraum (27) aufweist.

26. Kabelverschraubung nach einem der vorstehenden Ansprüche, dadurch gekennzeichnet, daß die Kabelverschraubung wenigstens teilweise aus Kunststoff besteht und zumindest ein Klemmeinsatz einstückig an der Schraubhülse (2) und/oder der Gegenhülse (3) angeformt ist.

27. Kabelverschraubung nach einem der Ansprüche 1 bis 26, dadurch gekennzeichnet, daß die Schraubhülse (2) aus Kunststoff besteht und ein der Gegenhülse (3) zugewandter ringförmiger Bereich der Schraubhülse (2) als einstückig mit dieser verbundener Klemmeinsatz (5) ausgebildet und vorzugsweise mit Schlitzen (7) versehen ist und für eine radiale Verformung dieses geschlitzten Bereiches einen nach innen vorzugsweise über einen Konus oder Radius sich verjüngenden Stirnbereich zum Zusammenwirken mit der Gegenhülse (3) oder einem Bereich des von der Gegenhülse (3) beaufschlagten zweiten Klemmeinsatzes (5) oder einem Dichtring (21) aufweist.

28. Kabelverschraubung nach einem der vorstehenden Ansprüche, dadurch gekennzeichnet, daß die beiden mit Abstand zueinander angeordneten Klemmeinsätze (5) auch in verschraubter und klemmender Position an den einander zugewandten Stirnseiten einen - dann verringerten - Abstand behalten, in den der durch das Verschrauben zusammengepreßte und verformte Dichtring (21) durch seine Stauchung und Verformung radial nach außen ragt und den gesamten Querschnitt abdichtet.

29. Kabelverschraubung nach einem der Ansprüche 1 bis 28, dadurch gekennzeichnet, daß mindestens drei Klemmstellen (8) vorgesehen sind, deren zwei zwischen sich den Hohlraum (9) haben, während zwischen diesen beiden Klemmstellen und der mindestens dritten Klemmstelle ein Hohlraum mit einer darin angeordneten Dichtung (23) vorgesehen ist.

30. Kabelverschraubung insbesondere nach einem der vorstehenden Ansprüche, dadurch gekennzeichnet, daß die zwischen zwei Klemmeinsätzen (5) oder Klemmstellen (8) angeordnete und gekammerte Dichtung (21) zumindest beim Anziehen der Verschraubung (1) mit wenigstens einem ihrer stirnseitigen Enden auf die Außenseite wenigstens eines der Klemmeinsätze schiebbar ist und dabei diesen Klemmeinsatz radial gegen das Kabel hin verformt.

31. Kabelverschraubung nach Anspruch 30, dadurch gekennzeichnet, daß die Dichtung schon vor dem Anziehen der Verschraubung mit einem stirnseitigen Bereich auf der Außenseite wenigstens eines der Klemmeinsätze aufliegt.

32. Kabelverschraubung nach einem der Ansprüche 30 oder 31, dadurch gekennzeichnet, daß die Dichtung die Außenseite des zweiten, der Gegenhülse (3) abgewandten Klemmeinsatzes beaufschlagt und vom ersten Klemmring außen übergriffen und in Gebrauchsstellung zusammen mit dem zweiten Klemmeinsatz gegen das Kabel und gegen die Auflage (31/14) der Schraubhülse (2) abgedichtet angepreßt ist.

33. Kabelverschraubung nach einem der Ansprüche 1 bis 32, dadurch gekennzeichnet, daß die Dichtung auch den von der Gegenhülse erfaßten Klemmeinsatz beim Verschrauben an dessen Außenseite übergreift und radial gegen das Kabel drückt.

34. Kabelverschraubung nach einem der vorstehenden Ansprüche, dadurch gekennzeichnet, daß die beiden Klemmeinsätze an den einander zugewandten Stirnseiten voneinander weg nach außen gerichtete Schrägen haben, an welchen jeweils ein stirnseitiges Ende der zwischen diesen beiden Klemmeinsätzen angeordneten Dichtung (21) angreift und beim Anziehen der Gegenhülse (3) aufschiebt und dadurch auch die Klemmeinsätze (5) beide radial gegen das Kabel (6) verformt.

35. Kabelverschraubung nach einem der Ansprüche 1 bis 34, dadurch gekennzeichnet, daß der in der Schraubhülse angeordnete Klemmeinsatz eine die Innenwandung der Schraubhülse auskleidende Fortsetzung (30) hat.

36. Kabelverschraubung nach einem der Ansprüche 1 bis 35, dadurch gekennzeichnet, daß die gegebenenfalls aus Metall bestehende Schraubhülse (2) einen radialen oder schrägen Absatz (31) oder eine radiale oder schräge Ringnut (32) aufweist, an der sich der eine Klemmeinsatz mit einer seiner Klemmstelle abgewandten Stirnseite abstützt und/oder einrastet.

37. Kabelverschraubung nach einem der Ansprüche 1 bis 36, dadurch gekennzeichnet, daß die verschraubbare Gegenhülse (3) im Bereich ihrer stirnseitigen, vorzugsweise konischen Ringfläche (15) eine Freidrehung (33) des Innengewindes und der an dieser Stelle vorgesehene Klemmeinsatz (5) einen in diese Freidrehung (33) ragenden, insbesondere einstückigen Außenring (34) aufweist.

38. Kabelverschraubung nach Anspruch 37, dadurch gekennzeichnet, daß die stirnseitige Ringfläche (15) der Gegenhülse im Bereich der Freidrehung (33) bis auf deren Grund konisch schräg verläuft.

39. Kabelverschraubung nach einem der vorstehenden Ansprüche, dadurch gekennzeichnet, daß im Inneren der Schraubhülse (2) od. dgl. an der der Gegenhülse (3) abgewandten Stirnseite (13) des Klemmeinsatzes (5) ein Gegendruckring (35) mit mindestens einer entsprechend geformten Stirnseite zum radialen Verformen des ihm zugewandten geschlitzten Bereiches des Klemmeinsatzes und/oder eines Dichteinsatzes vorgesehen ist.

40. Kabelverschraubung nach einem der vorstehenden Ansprüche, dadurch gekennzeichnet, daß in der Gegenhülse (3) eine Absetzung (47) mit oder ohne Hinterschneidung der Innenwandung vorgesehen ist, an welcher der Druckring (35) aufliegt, der in eine entsprechend geformte Außennut (49) der einstückig verbundenen Klemmeinsätze (5), welche in eine eventuell vorhandene Hinterschneidung hineinragend, vorzugsweise einseitige axiale Schlitze aufweisen, eingreift und die einstückig verbundenen Klemmeinsätze beim Aufschrauben der Gegenhülse (3) im Zusammenwirken mit dem Druckkonus (15) der Gegenhülse (3), in radialer Richtung verformt, wobei die Klemmstellen (8) parallel zusammendrückbar sind.

41. Kabelverschraubung nach einem der Ansprüche 1 bis 40, dadurch gekennzeichnet, daß die beiden einstückig verbundenen Klemmeinsätze auch einstückig an der Schraubhülse angeformt sind.

42. Kabelverschraubung nach Anspruch 41, dadurch gekennzeichnet, daß der Gegendruckring mit seiner dem Klemmeinsatz abgewandten Stirnseite eine sich axial anschließende Dichtung (23) beaufschlagt und beim Anziehen der Gegenhülse in Dichtstellung verformt.

43. Kabelverschraubung nach einem der vorstehenden Ansprüche, dadurch gekennzeichnet, daß der Gegendruckring die Dichtung an der Außenseite hülsenförmig ganz oder teilweise übergreift und dadurch gegenüber dem Gewinde abschirmt.

44. Kabelverschraubung nach einem der Ansprüche 1 bis 43, dadurch gekennzeichnet, daß der Gegendruckring (35) geschlitzt ist und unter Einwirkung einer Schrägfläche gleichzeitig radial gegen einen von ihm teilweise übergriffenen Bereich des Dichtringes (23) verformbar ist.

45. Kabelverschraubung nach einem der Ansprüche 1 bis 44, dadurch gekennzeichnet, daß ein einerseits zwischen zwei gegebenenfalls einstückigen Klemmeinsätzen (5) und andererseits einem dritten Klemmeinsatz angeordneter Dichtring (23) an wenigstens einer seiner Stirnseiten von einem Gegendruckring (35) beaufschlagt ist, der seinerseits an einem der Klemmeinsätze (5) anliegt.

46. Kabelverschraubung nach einem der Ansprüche 1 bis 45, dadurch gekennzeichnet, daß der außerhalb der beiden gegebenenfalls einstückig verbundenen Klemmeinsätze in Fortsetzung des inneren schraubhülsenseitigen Klemmeinsatzes angeordnete Dichtring (23) von einer äußeren Fortsetzung (38) des Klemmeinsatzes (5) an seiner Außenseite übergriffen und gegenüber dem Gewindebereich der Kabelverschraubung (1) abgeschirmt ist, wobei diese Fortsetzung (38) mit der Schraubhülse einstückig verbunden sein kann.

47. Kabelverschraubung nach einem der Ansprüche 1 bis 46, dadurch gekennzeichnet, daß die - schräge oder gerundete - Druckfläche (15) der Gegenhülse (3) und die dieser zugewandte Druckfläche (46) und/oder die abgewandte Druckfläche (51) des Druckringes (35) zueinander Steigungen bzw. Steigungswinkel unterschiedlicher Größe haben.

48. Kabelverschraubung nach einem der Ansprüche 1 bis 47, dadurch gekennzeichnet, daß die Druckfläche (15) der Gegenhülse (3) die Druckfläche (46) des Gegendruckringes (35) beim axialen Verstellen des Verstellweges über den Klemmeinsatz (5) beaufschlagt und in Ausgangslage zwischen dem Gegendruckring (35) und der Anschlag-Absetzung (47) an der Innenseite der Gegenhülse (3) ein bei der axialen Verstellung sich verringernder und verschwindender Abstand (48) vorgesehen ist.

49. Kabelverschraubung nach einem der Ansprüche 1 bis 47, dadurch gekennzeichnet, daß der in die Außennut (49) des gegebenenfalls einstückig mit der Schraubhülse (2) verbundenen Klemmeinsatzes (5) eingreifende Gegendruckring (35) in Ausgangslage an der Absetzung (47) anliegt und zwischen der Druckfläche (13) des Klemmeinsatzes (5) und der inneren Druckflache (15) der Gegenhülse (3) ein bei der axialen Verstellung sich verringernder und verschwindender Abstand (50) vorgesehen ist.

**Claims**

1. A screw-threaded cable fitting (1) for insulated cable (6) or a protective tube or hose, including a screwed sleeve (2) and a counter-sleeve (3) connectable thereto, preferably threadedly, and further including a clamping insert (5, 28) which is adapted to he pressed therewith or thereby against the cable (6) or a protective tube or hose and is made of harder material than the cable sheath, the counter-sleeve (3) or the like engaging over the clamping insert outwardly and with a ring area at least at the face and, as the thread is fastened, deforming with a tapering shape, e.g. by means of a cone (14, 15), the clamping insert (5) in an area thereof provided with axial slits (7) opening out at the face (13), such deformation taking place radially towards the cable (6), thus fixing and directly or indirectly sealing the cable, **characterized in that** at least two at least radially yielding clamping inserts (5) are provided, the clamping locations (8) thereof acting axially upon the cable (6) or tube in adjacent, spaced relationship to one another and further having a cavity (9) between them, and that in the position of use the cavity (9) confines a bulge (11) formed by the constrictions of the cable (6) or tube which are developed during clamping.

2. A screw-threaded cable fitting as claimed in claim 1, characterized in that the two clamping inserts (5) have at the confronting faces thereof flat or inwardly and outwardly tapered faces (12), which, by way of the outer faces (13), are acted upon by inner cones (14, 15) of the screwed sleeve and counter-sleeve so as to be compressible in an axial and radial direction for radially compressing the slit areas of said clamping inserts as the counter-sleeve is tightened.

3. A screw-threaded cable fitting as claimed in claim 1 or claim 2, characterized in that the two clamping inserts (5) are integrally connected.

4. A screw-threaded cable fitting as claimed in claim 3, characterized in that the slits (7), which are on both sides of the integrally connected clamping inserts (5) and are open-ended in each case toward one face (13), in each case run in an axial direction beyond the one half of the clamping insert (5) right into the other half, so that the closed end areas of the slits (7) overlap.

5. A screw-threaded cable fitting as claimed in any one of claims 1 to 4, characterized in that the integrally connected clamping inserts (5) have a support (16) toward the inside of the screwed sleeve (2) and/or counter-sleeve (3), in particular said support being approximately in the common centre of said inserts.

6. A screw-threaded cable fitting as claimed in any one of claims 3 to 5, characterized in that the clamping insert (5) is provided with a support (16) in the form of an approximately ring-shaped, externally threaded projection, which external thread fits the internal thread of the counter-sleeve (3) engaging over an external thread of the screwed sleeve (2) and is engaged and acted upon by the internal thread of the counter-sleeve (3) as the screw coupling is tightened.

7. A screw-threaded cable fitting as claimed in any one of claims 1 to 6, characterized in that the inner ring surface (15) belonging to the counter-sleeve (3) and/or the opposite surface (14) co-operating therewith via the clamping inserts (5) and belonging to the screwed sleeve (2), between which surfaces the one-piece or two-piece clamping inserts (5) are arranged, show an oblique or conical, arched or curved development from without to within in such a way that inside, closer to their central axis, they are more distant that at their outer diameters, and that the clamping inserts (5) at the faces (13) thereof co-operating with said ring surfaces (14, 15) are preferably adapted to said ring surfaces and in particular are slit.

8. A screw-threaded cable fitting as claimed in any one of claims 1 to 7, characterized in that the slits (7) which run in the axial direction and are open at the faces of the clamping inserts (5) show an oblique development in the radial direction.

9. A screw-threaded cable fitting as claimed in any one of claims 1 to 8, characterized in that the slits (7) of the clamping inserts (5) at least in one of the areas radially deformable by a cone, preferably in the region of the counter-sleeve (3), are closed particularly at the inside by a thin, yielding, one-piece skin (20).

10. A screw-threaded cable fitting as claimed in any one of claims 1 to 9, characterized in that the slits of the second clamping insert or second clamping location preferably in the region of the screwed sleeve (2) are closed particularly at the outside of the clamping insert by an integrally connected, thin and yielding skin (20).

11. A screw-threaded cable fitting as claimed in any one of the preceding claims, characterized in that the preferably integrally connected clamping inserts having slits open at one clamping area to the outside and at the other clamping area to the inside and as for the rest covered by a skin have between these two partially slit areas at least one sealing collar which projects radially outwardly and in particular simultaneously acts on the inside of the screwed sleeve and/or counter-sleeve as a support.

12. A screw-threaded cable fitting as claimed in any one of claims 1 to 11, characterized in that at least one sealing ring (21) is arranged or enclosed in the cavity which faces the cable or tube and is intermediate two clamping locations (8) of the clamping inserts (5) and that at least in the position of use or clamping position the clamping zones (8) of the clamping insert(s) (5) engage wholly or partly over the two end faces (22) of the sealing ring (21).

13. A screw-threaded cable fitting as claimed in any one of claims 1 to 12, characterized in that a seal (23) compressible by the clamping inserts (5) through tightening of the counter-sleeve (3) is arranged in the axial direction adjacent to the clamping inserts (5) or the integrally connected clamping inserts.

14. A screw-threaded cable fitting as claimed in any one of claims 1 to 13, characterized in that between the clamping inserts or the integrally connected clamping inserts and the sealing insert (23) arranged axially adjacent thereto there is a connecting sleeve (24) provided and configured on the side facing the clamping inserts for deformation of the latter and having a connection for the counter-sleeve, while the axially opposite side serves for deformation of the seal and has a connection for the screwed sleeve, so that the clamping inserts and the seal are deformable independently of one another.

15. A screw-threaded cable fitting as claimed in any one of claims 1 to 14, characterized in that the seal (21) is arranged between the clamping insert(s) (5) or the clamping locations (8) thereof and the cable (6) or tube or is arranged so as to be supported against the screwed sleeve (2) at least in the axially adjacent area of the clamping insert or of the clamping insert integrally connected to the screwed sleeve, and is passed through the clamping insert over one or more clamping locations, so that the seal clamped firmly between cable and clamping insert prevents the cable surface from being damaged by the clamping insert at said location.

16. A screw-threaded cable fitting as claimed in any one of the preceding claims, characterized in that the sealing insert has at least at one face a step-like, flat, oblique or curved relief which is engaged over by at least one clamping location of a clamping insert in the area of the step.

17. A screw-threaded cable fitting as claimed in any one of the preceding claims, characterized in that the sealing insert (21, 23) passed wholly or partly through the clamping locations, at its face averted from the counter-sleeve (3), takes the form of a sealing lip (26) directed towards the cable (6) or tube and preferably is lengthened, or at least one clamping insert receives and clamps a sealing lip between the face of the clamping insert and the sleeve acting upon the latter.

18. A screw-threaded cable fitting as claimed in any one of claims 1 to 17, characterized in that the preferably integrally connected clamping inserts (5) are provided with a support (16) in the form of a radially peripheral supporting collar which is connected to the clamping insert (5) by way of a radially protruding ring or web (17) and at the side of said connection has in relation to the clamping insert (5) a ring-shaped space (18), the front end (19) of the screwed sleeve (2) at least partly engaging said space.

19. A screw-threaded cable fitting as claimed in claim 18, characterized in that the front end (19) of the screwed sleeve (2) engaging the ring-shaped space (18) under the supporting collar of the support (16) is approximately knife-shaped and preferably is conically enlarged.

20. A screw-threaded cable fitting as claimed in any one of claims 1, 2 or 6 to 19, characterized in that the two clamping inserts (5) - which are maintained in spaced relationship to one another and have an interposed cavity (9) receiving a bulge (11) of the cable (6) and/or a seal arranged there - are separate from one another and at the confronting faces (12) have a spacing reducible or closable through screwing the screwed sleeve (2) and counter-sleeve (3) together and/or overlap so as to be slidable telescopically and relative to one another.

21. A screw-threaded cable fitting as claimed in any one of claims 1 to 20, characterized in that at least one clamping insert (28) is provided with a gentle slope on the outside (29) thereof sloping off at an acute angle from the largest diameter towards the cable surface, the inclination of the slope being directed toward the opening (30) of the counter-sleeve (3), and a further clamping insert which has a more obtuse-angled cone, curvature or rounding and co-operates with the counter-sleeve (3) and/or screwed sleeve (2) acting directly or indirectly on the outside (29) of said slope.

22. A screw-threaded cable fitting as claimed in claim 21, characterized in that inside the seal (21) acted upon by the two clamping inserts (5) having an intervening cavity (9) or in at least one of the clamping inserts there is an additional radially yielding insert (28) which is provided on both sides with axial slits (7) and has an acute-angled, self-locking cone at the outside (29) as additional strain relief.

23. A screw-threaded cable fitting as claimed in any one of the preceding claims, characterized in that the strain relief insert (28) is provided with one or two gentle slopes or gentle curvatures at the outside thereof and is situated in a clamping insert or in the sealing insert.

24. A screw-threaded cable fitting as claimed in any one of the preceding claims, characterized in that the clamping insert having more obtuse-angled slopes or curvatures and encompassing the strain relief insert has slits offset on either side, overlapping in the axial direction, enabling rapid, parallel, radial compression of the two inserts.

25. A screw-threaded cable fitting as claimed in any one of claims 1 to 24, characterized in that the self-locking strain relief insert (28) has at the inside wall thereof - which faces the cable or tube surface and is of any shape for holding fast the cable or tube - a cavity (27) intermediate two clamping locations.

26. A screw-threaded cable fitting as claimed in any one of the preceding claims, characterized in that the screw-threaded cable fitting consists at least partly of plastics and at least one clamping insert is formed integrally with the screwed sleeve (2) and/or counter-sleeve (3).

27. A screw-threaded cable fitting as claimed in any one of claims 1 to 26, characterized in that the screwed sleeve (2) consists of plastics and an annular area thereof facing the counter-sleeve (3) takes the form of a clamping insert (5) integrally connected thereto and preferably provided with slits (7) and for a radial deformation of said slit area has a frontal area tapering inwardly preferably by way of a cone or radius for co-operating with the counter-sleeve (3) or an area of the second clamping insert (5) acted upon by the counter-sleeve (3) or a sealing ring (21).

28. A screw-threaded cable fitting as claimed in any one of the preceding claims, characterized in that in the screwed and clamping position the two spaced clamping inserts (5) retain a spacing - one which is then reduced - at the confronting faces, the sealing ring (21) compressed and deformed through tightening of the screw coupling thereby projecting radially outwardly into said spacing and sealing the entire cross section.

29. A screw-threaded cable fitting as claimed in any one of claims 1 to 28, characterized in that at least three clamping locations (8) are provided, two of which have between each other the cavity (9), while between said two clamping locations and the at least third clamping location there is a cavity provided with a seal (23) arranged therein.

30. A screw-threaded cable fitting, in particular as claimed in any one of the preceding claims, characterized in that the seal (21) arranged and confined between two clamping inserts (5) or clamping locations (8) is slidable with at least one of its front ends onto the outside of at least one of the clamping inserts, at least when the screw coupling (1) is tightened, and in so doing deforms said clamping insert radially towards the cable.

31. A screw-threaded cable fitting as claimed in claim 30, characterized in that the seal may have an end area thereof lying on the outside of at least one of the clamping inserts even prior to the screw coupling being tightened.

32. A screw-threaded cable fitting as claimed in either of claims 30 or 31, characterized in that the seal acts upon the outside of the second clamping insert averted from the counter-sleeve (3) and is outwardly engaged over by the first clamping ring and in the position of use is sealingly pressed together with the second clamping insert against the cable and against the support (31/14) of the screwed sleeve (2).

33. A screw-threaded cable fitting as claimed in any one of claims 1 to 32, characterized in that the seal also engages over the outside of the clamping insert (5) grasped by the counter-sleeve (3) and urges the clamping insert radially towards the cable as the screw coupling is tightened.

34. A screw-threaded cable fitting as claimed in any one of the preceding claims, characterized in that the two clamping inserts have at the confronting faces slopes directed outwards away from one another, the ends of the seal (21) arranged between said two clamping inserts acting upon and sliding on the slopes as the counter-sleeve (3) is tightened and thereby also deforming both the clamping inserts (5) radially towards the cable (6).

35. A screw-threaded cable fitting as claimed in any one of claims 1 to 34, characterized in that the clamping insert arranged in the screwed sleeve has a continuation (30) lining the inside wall of the screwed sleeve.

36. A screw-threaded cable fitting as claimed in any one of claims 1 to 35, characterized in that the screwed sleeve (2) possibly consisting of metal has a radial or sloping shoulder (31) or a radial or sloping annular groove (32) at which the one clamping insert (5) is supported and/or engaged with a face averted from the clamping location thereof.

37. A screw-threaded cable fitting as claimed in any one of claims 1 to 36, characterized in that the counter-sleeve (3) connectable by screw action has in the region of its end, preferably conical, ring area (15) a recess of the internal thread and the clamping location (5) provided at said location has an outer ring (34), particularly a one-piece outer ring, projecting into said recess (33).

38. A screw-threaded cable fitting as claimed in claim 37, characterized in that the end ring area (15) of the counter-sleeve runs conically sloped in the area of and right to the base of the recess (33).

39. A screw-threaded cable fitting as claimed in any one of the preceding claims, characterized in that inside the screwed sleeve (2) or the like at that face (13) of the clamping insert (5) which is averted from the counter-sleeve (3) a counter-pressure ring (35) is provided and has at least one correspondingly shaped face for radially deforming the confronting slit area of the clamping insert and/or of a sealing insert.

40. A screw-threaded cable fitting as claimed in any one of the preceding claims, characterized in that in the counter-sleeve (3) a relief (47) is provided with or without an undercut of the inside wall and the pressure ring (35) engages a correspondingly shaped outer groove (49) of the integrally connected clamping inserts (5) and lies against said relief, the clamping inserts projecting into any undercut present and preferably having axial slits at one side, as the counter-sleeve (3) is screwed on the integrally connected clamping inserts are deformed in a radial direction by the relief in co-operation with the pressure cone (15) of the counter-sleeve (3), the clamping locations (8) being compressible in parallel.

41. A screw-threaded cable fitting as claimed in any one of claims 1 to 40, characterized in that the two integrally connected clamping inserts are also integrally formed with the screwed sleeve.

42. A screw-threaded cable fitting as claimed in claim 41, characterized in that the counterpressure ring with a face thereof averted from the clamping insert acts upon an axially adjoining seal (23) and deforms the seal into a sealing position as the counter-sleeve is tightened.

43. A screw-threaded cable fitting as claimed in any one of the preceding claims, characterized in that the counterpressure ring engages over the outside of the seal wholly or partly in a sleeve-like manner and is thereby a shield with respect to the thread.

44. A screw-threaded cable fitting as claimed in any one of claims 1 to 43, characterized in that the counterpressure ring (35) is slit and with the action of an inclined surface is simultaneously radially deformable towards the sealing ring (23) in an area in which said former ring partly engages over the latter.

45. A screw-threaded cable fitting as claimed in any one of claims 1 to 44, characterized in that a sealing ring (23), which is arranged between on the one side two possibly one-piece clamping inserts (5) and on the other side a third clamping insert, has at least one of its faces acted upon by a counterpressure ring (35), the latter for its part resting against one of the clamping inserts (5).

46. A screw-threaded cable fitting as claimed in any one of claims 1 to 45, characterized in that the sealing ring (23) arranged outside the two - possibly integrally connected - clamping inserts in continuation of that inner clamping insert which is in the direction of the screwed sleeve is shielded relative to the threaded area of the screw-threaded cable fitting (1) by the clamping insert (5) at an outer continuation (38) thereof engaging over the outside of the sealing ring, and said continuation (38) may be integrally connected to the screwed sleeve.

47. A screw-threaded cable fitting as claimed in any one of claims 1 to 46, characterized in that the - sloped or rounded - pressure area (15) of the counter-sleeve (3) and the facing pressure area (46) and/or the averted pressure area (51) of the pressure ring (35) have inclinations and angles of inclination of different magnitude.

48. A screw-threaded, cable fitting as claimed in any one of claims 1 to 47, characterized in that the pressure area (15) of the counter-sleeve (3) acts upon the pressure area (46) of the counterpressure ring (35) during axial movement by way of the clamping insert (5) and in the starting position there is between the counterpressure ring (35) and the relief (47) at the inside of the counter-sleeve (3) a space (48) diminishing and disappearing during axial movement.

49. A screw-threaded cable fitting as claimed in any one of claims 1 to 47, characterized in that in the starting position the counterpressure ring (35), which engages the outer groove (49) of the clamping insert (5) possibly integrally connected to the screwed sleeve (2), rests against the relief (47) and a space (50) is provided between the pressure area (13) of the clamping insert (5) and the inner pressure area (15) of the counter sleeve (3), said space diminishing and disappearing during axial movement.

**Revendications**

1. Passe-câble (1) pour câble isolé (6) ou tuyau de protection comportant une douille à vis (2), une contre-douille (3) pouvant être assemblée à la première, de préférence au moyen d'un filetage et comportant une garniture de serrage (5, 28) pouvant être pressée avec ou par la contre-douille contre le câble (6) ou contre un tuyau de protection, réalisée dans un matériau plus dur que la gaine de câble, dans lequel la contre-douille (3) ou similaire passe de l'extérieur, par une surface annulaire, au moins sur le côté frontal, sur la garniture de serrage et déforme, radialement vers le câble (6), lors du serrage du filetage, par une forme se rétrécissant, par exemple au moyen d'un cône (14, 15), une région de la garniture de serrage (5), pourvue de fentes (7) axiales, débouchant sur le côté frontal (13), fixe le câble et assure son étanchéité directement ou indirectement, caractérisé en ce qu'il est prévu au moins deux garnitures de serrage (5), au moins élastiques radialement, dont les points de serrage (8) agissent l'un à côté de l'autre, espacés axialement, sur le câble (6) ou le tuyau et présentent entre eux une cavité (9) et en ce qu'en position d'utilisation, un renflement (11), formé par les étranglements du câble (6) ou du tuyau, dus au serrage, est enfermé dans la cavité (12).

2. Passe-câble à vis selon la revendication 1, caractérisé en ce que les deux garnitures de serrage (5) présentent, sur leurs côtés frontaux tournés l'un vers l'autre, des faces frontales (12), planes ou coniques intérieures et coniques extérieures, qui peuvent être comprimées en direction axiale et radiale, par les faces frontales extérieures (13) de cônes intérieurs (14, 15) de la douille à vis et de la contre-douille, en vue de la réunion par pression radiale de leurs régions fendues, lorsque la contre-douille est serrée.

3. Passe-câble à vis selon la revendication 1 ou 2, caractérisé en ce que les deux garnitures de serrage (5) sont assemblées d'une seule pièce.

4. Passe-câble à vis selon la revendication 3, caractérisé en ce que les fentes (7) situées des deux côtés, aux bords ouverts en direction d'un côté frontal (13), des garnitures de serrage (5) assemblées d'une seule pièce, s'étendent chacune en direction axiale sur une moitié de la garniture de serrage (5) et au-delà jusque sur l'autre moitié, de manière que les zones terminales fermées des fentes (7) se recouvrent.

5. Passe-câble à vis selon l'une des revendications 1 à 4, caractérisé en ce que les garnitures de serrage (5) assemblées d'une seule pièce présentent un appui (16) par rapport au côté intérieur de la douille à vis (2) et/ou de la contre-douille (3), notamment à peu près en leur milieu commun.

6. Passe-câble à vis selon l'une des revendications 3 à 5, caractérisé en ce qu'il est prévu comme appui (16), sur la garniture de serrage (5), une partie saillante à peu près annulaire avec un filetage qui est adapté au taraudage de la contre-douille (3) passant sur un filetage de la douille à vis (2) et qui est saisi par le taraudage de la contre-douille (3) et soumis à son action, lorsque le passe-câble est vissé.

7. Passe-câble à vis selon l'une des revendications 1 à 6, caractérisé en ce que la surface annulaire intérieure (15) de la contre-douille (3) et/ou la contre-surface (14) de la douille à vis (2), coopérant avec celle-ci, par l'intermédiaire des garnitures de serrage (5), surfaces entre lesquelles sont placées les garnitures de serrage (5), constituées de deux pièces ou d'une seule pièce, s'étendent de l'extérieur vers l'intérieur, obliquement ou coniquement, de manière courbée ou arrondie, de telle sorte qu'à l'intérieur, à proximité de leur axe médian, elles soient plus écartées que sur leur diamètre extérieur et en ce que les garnitures de serrage (5) sont adaptées, sur leurs côtés frontaux (13) coopérant avec ces surfaces annulaires (14, 15), de préférence à ces surfaces annulaires et sont notamment fendues.

8. Passe-câble à vis selon l'une des revendications 1 à 7, caractérisé en ce que les fentes (7) s'étendant axialement et ouvertes frontalement, des garnitures de serrage (5), s'étendent obliquement en direction radiale.

9. Passe-câble à vis selon l'une des revendications 1 à 8, caractérisé en ce que les fentes (7) des garnitures de serrage (5) sont fermées par une pellicule (20) mince, souple, d'une seule pièce, dans une région déformable radialement par un cône, de préférence dans la région de la contre-douille (3), notamment sur le côté intérieur.

10. Passe-câble à vis selon l'une des revendications 1 à 9, caractérisé en ce que les fentes de la deuxième garniture de serrage ou du deuxième point de serrage sont fermées par une pellicule (20) mince et souple, assemblée d'une seule pièce, de préférence dans la région de la douille à vis (2), notamment sur le côté extérieur de la garniture de serrage.

11. Passe-câble à vis selon l'une des revendications précédentes, caractérisé en ce que les garnitures de serrage assemblées de préférence d'une seule pièce avec des fentes ouvertes vers l'extérieur sur une zone de serrage et ouvertes vers l'intérieur sur l'autre zone de serrage et fermées par ailleurs par une pellicule, possèdent, entre ces deux zones partiellement fendues, au moins un épaulement d'étanchéité faisant saillie radialement vers l'extérieur qui agit notamment en même temps comme appui sur le côté intérieur de la douille à vis et/ou de la contre-douille.

12. Passe-câble à vis selon l'une des revendications 1 à 11, caractérisé en ce que dans la cavité tournée vers le câble ou le tuyau, il est placé ou enfermé au moins une bague d'étanchéité (21) entre deux points de serrage (8) des garnitures de serrage (5) et en ce que les deux côtés frontaux ou faces frontales (22) de la bague d'étanchéité (21) sont partiellement ou totalement recouvertes, au moins en position d'utilisation ou de serrage, par les zones de serrage (8) de la ou des garnitures de serrage (5).

13. Passe-câble à vis selon l'une des revendications 1 à 12, caractérisé en ce qu'il est placé, en direction axiale, à côté des garnitures de serrage (5) ou des garnitures de serrage assemblées d'une seule pièce, un organe d'étanchéité (23) qui peut être comprimé par serrage de la contre-douille (3) par les garnitures de serrage.

14. Passe-câble à vis selon l'une des revendications 1 à 13, caractérisé en ce qu'il se trouve, entre les garnitures de serrage ou les garnitures de serrage assemblées d'une seule pièce et la garniture d'étanchéité (23) placée à côté, une douille de liaison (24) qui est prévue et conçue sur le côté tourné vers les garnitures de serrage, en vue de leur déformation et qui présente un raccord pour la contre-douille, tandis que le côté axialement opposé sert à la déformation de l'organe d'étanchéité et présente un raccord pour la douille à vis, ce qui fait que les garnitures de serrage et l'organe d'étanchéité sont déformables indépendamment les unes des autres.

15. Passe-câble à vis selon l'une des revendications 1 à 14, caractérisé en ce que l'organe d'étanchéité (21) est placé entre le ou les garnitures de serrage (5) ou leurs points de serrage (8) et le câble (6) ou tuyau ou prend appui au moins dans la zone axialement voisine de la garniture de serrage ou de la garniture de serrage assemblée d'une seule pièce avec la douille à vis, contre la douille à vis (2) et se prolonge, à travers la garniture de serrage, au-delà d'un ou de plusieurs points de serrage, ce qui fait que l'organe d'étanchéité, fermement serré entre le câble et la garniture de serrage, empêche que la surface du câble ne soit endommagée à cet endroit par la garniture de serrage.

16. Passe-câble à vis selon l'une des revendications précédentes, caractérisé en ce que la garniture d'étanchéité présente, au moins sur un côté frontal, un épaulement plan, oblique ou arrondi sur lequel passe au moins un point de serrage d'une garniture de serrage, dans la zone de l'épaulement.

17. Passe-câble à vis selon l'une des revendications précédentes, caractérisé en ce que le côté frontal, opposé à la contre-douille (3), de la garniture d'étanchéité (21, 23), traversant totalement ou partiellement les points de serrage, est une lèvre d'étanchéité (26) dirigée vers le câble (6) ou le tuyau et est prolongé de préférence ou une garniture de serrage au moins loge et serre une lèvre d'étanchéité entre son côté frontal et la douille agissant sur celle-ci.

18. Passe-câble à vis selon l'une des revendications 1 à 17, caractérisé en ce qu'il est prévu, comme appui (16) des garnitures de serrage (5), reliées de préférence d'une seule pièce, un collet d'appui situé radialement sur le côté extérieur, qui est relié avec la garniture de serrage (5), par un anneau faisant saillie radialement ou une nervure (17) et qui, à côté de cette liaison, présente un espace annulaire (18) par rapport à la garniture de serrage (5), dans laquelle s'engage au moins partiellement le côté frontal (19) de la douille à vis (2).

19. Passe-câble à vis selon la revendication 18, caractérisé en ce que le côté frontal (19) de la douille à vis (2), s'engageant dans l'espace annulaire (18), sous le collet de l'appui (16), est à peu près configuré en tranchant et s'épaissit de préférence coniquement.

20. Passe-câble à vis selon l'une des revendications 1, 2 ou 6 à 19, caractérisé en ce que les deux garnitures de serrage (5) espacées l'une de l'autre et présentant entre elles une cavité (9) logeant un renflement (11) du câble (6) et/ou un organe d'étanchéité (21) placé à cet endroit, sont séparées l'une de l'autre et présentent, sur les côtés frontaux (12) tournés l'un vers l'autre, un espace pouvant être réduit ou fermé par vissage de la douille à vis (2) et de la contre-douille (3) et/ou passent l'une sur l'autre de manière télescopique et par coulissement relatif.

21. Passe-câble à vis selon l'une des revendications 1 à 20, caractérisé en ce qu'il est prévu au moins une garniture de serrage (28) avec une surface oblique plate sur son côté extérieur (29), qui descend vers la surface de câble sous un angle aigu, à partir du plus grand diamètre, la pente de la surface oblique étant orientée vers l'ouverture (30) de la contre-douille (3) et une autre garniture de serrage avec cône à angle plus obtus ou courbure ou arrondi, coopérant avec la contre-douille (3) et/ou la douille à vis (2), agissant directement ou indirectement sur le côté extérieur (29) de cette surface oblique.

22. Passe-câble à vis selon la revendication 21, caractérisé en ce qu'à l'intérieur de la garniture d'étanchéité (21) sollicitée par les deux garnitures de serrage (5), laissant entre elles une cavité (9), ou dans au moins l'une des garnitures de serrage, il est prévu une garniture (28) supplémentaire, élastique radialement, pourvue des deux côtés de fentes axiales (7) avec cône à angle aigu autobloquant, sur le côté extérieur (29), servant de décharge de traction supplémentaire.

23. Passe-câble à vis selon l'une des revendications précédentes, caractérisé en ce que la garniture de décharge de traction (28) présente une ou deux parties obliques plates ou parties arrondies plates sur son côté extérieur, qui se trouve dans une garniture de serrage ou dans la garniture d'étanchéité.

24. Passe-câble à vis selon l'une des revendications précédentes, caractérisé en ce que la garniture de serrage entourant la garniture de décharge de traction avec parties obliques à angle plus obtus ou parties arrondies, présente des deux côtés des fentes se recouvrant en direction axiale qui permettent de presser ensemble rapidement, parallèlement et radialement les deux garnitures.

25. Passe-câble à vis selon l'une des revendications 1 à 24, caractérisé en ce que la garniture de décharge de traction (28) autobloquante présente, sur sa paroi intérieure tournée vers la surface de câble ou de tuyau et de forme quelconque visant à maintenir le câble ou le tuyau, une cavité (27) se trouvant entre deux points de serrage.

26. Passe-câble à vis selon l'une des revendications précédentes, caractérisé en ce que le passe-câble à vis est réalisé au moins partiellement en matière plastique et en ce qu'une garniture de serrage au moins est formée d'une seule pièce sur la douille à vis (2) et/ou la contre-douille (3).

27. Passe-câble à vis selon l'une des revendications 1 à 26, caractérisé en ce que la douille à vis (2) est en matière plastique et une région annulaire, tournée vers la contre-douille (3), de la douille à vis (2) est formée d'une seule pièce avec cette garniture de serrage (5) assemblée et est de préférence pourvue de fentes (7) et présente, pour une déformation radiale de cette région fendue, une région frontale se rétrécissant vers l'intérieur, de préférence par un cône ou un rayon, en vue de coopérer avec la contre-douille (3) ou une région de la deuxième garniture de serrage (5) sollicitée par la contre-douille (3) ou avec une bague d'étanchéité (21).

28. Passe-câble à vis selon l'une des revendications précédentes, caractérisé en ce que les deux garnitures de serrage (5), espacées l'une de l'autre, conservent, même en position vissée et serrée contre les côtés frontaux tournés l'un vers l'autre, un écartement - réduit ensuite - dans lequel la bague d'étanchéité (21) comprimée et déformée par le vissage, dépasse radialement vers l'extérieur du fait de sa compression et déformation et assure l'étanchéité de l'ensemble de la section transversale.

29. Passe-câble à vis selon l'une des revendications 1 à 28, caractérisé en ce qu'il est prévu au moins trois points de serrage (8) dont deux ont entre eux la cavité (9), tandis qu'entre ces deux points de serrage et le troisième point de serrage au moins, il est prévu une cavité avec un organe d'étanchéité (23) placé à l'intérieur de celle-ci.

30. Passe-câble à vis notamment selon l'une des revendications précédentes, caractérisé en ce que l'organe d'étanchéité (21) placé et enfermé entre deux garnitures de serrage (5) ou points de serrage (8), peut se déplacer, au moins lorsque le passe-câble (1) est vissé, par au moins l'une de ses extrémités frontales, sur le côté extérieur d'au moins l'une des garnitures de serrage et déforme ainsi radialement cette garniture de serrage vers le câble.

31. Passe-câble à vis selon la revendication 30, caractérisé en ce que l'organe d'étanchéité repose par une région frontale sur le côté extérieur de l'une au moins des garnitures de serrage, avant même que le passe-câble ne soit vissé.

32. Passe-câble à vis selon l'une des revendications 30 ou 31, caractérisé en ce que l'organe d'étanchéité agit sur le côté extérieur de la deuxième garniture de serrage, éloignée de la contre-douille (3) et est entouré de l'extérieur par la bague de serrage et, en position d'utilisation, est pressé de manière étanche avec la deuxième garniture de serrage, contre le câble et contre l'appui (31/14) de la douille à vis (2).

33. Passe-câble à vis selon l'une des revendications 1 à 32, caractérisé en ce que l'organe d'étanchéité passe aussi sur le côté extérieur de la garniture de serrage, entourée par la contre-douille, lors du vissage et la presse radialement contre le câble.

34. Passe-câble à vis selon l'une des revendications précédentes, caractérisé en ce que les deux garnitures de serrage possèdent, sur les côtés frontaux tournés l'un vers l'autre, des parties obliques dirigées vers l'extérieur de manière à les éloigner l'une de l'autre, sur chacune desquelles agit une extrémité frontale de l'organe d'étanchéité (21) placé entre ces deux garnitures de serrage et déplace lors du serrage de la contre-douille (3) et déforme ainsi aussi radialement les deux garnitures de serrage (5) vers le câble (6).

35. Passe-câble à vis selon l'une des revendications 1 à 34, caractérisé en ce que la garniture de serrage placée dans la douille à vis possède un prolongement (30) recouvrant la paroi intérieure de la douille à vis.

36. Passe-câble à vis selon l'une des revendications 1 à 35, caractérisé en ce que la douille à vis (2), éventuellement réalisée en métal, présente un talon (31) radial ou oblique ou une rainure annulaire (32) radiale ou oblique contre laquelle prend appui et/ou dans laquelle s'engage l'une des garnitures de serrage par un côté frontal éloigné de son point de serrage.

37. Passe-câble à vis selon l'une des revendications 1 à 36, caractérisé en ce que la contre-douille (3) à visser présente, dans la région de sa surface annulaire (15) frontale, de préférence conique, une partie à rotation libre (33) du taraudage et la garniture de serrage (5), prévue à cet endroit, une bague extérieure (34), notamment d'une seule pièce, s'engageant dans cette partie à rotation libre (33).

38. Passe-câble à vis selon la revendication 37, caractérisé en ce que la surface annulaire (15) frontale de la contre-douille s'étend obliquement et coniquement dans la région de la partie à rotation libre (33) jusque sur son fond.

39. Passe-câble à vis selon l'une des revendications précédentes, caractérisé en ce qu'à l'intérieur de la douille à vis (2) ou similaire, sur le côté frontal (13) éloigné de la contre-douille (3) de la garniture de serrage (5), il est prévu une contre-bague de pression (35) avec au moins un côté frontal de forme correspondante, en vue de la déformation radiale de la région fendue, tournée vers cette contre-bague, de la garniture de serrage et/ou d'une garniture d'étanchéité.

40. Passe-câble à vis selon l'une des revendications précédentes, caractérisé en ce qu'il est prévu, dans la contre-douille (3), un épaulement (47) avec ou sans détalonnage de la paroi intérieure, contre lequel repose la bague de pression (35) qui s'engage dans une rainure extérieure (49), de forme correspondante, des garnitures de serrage (5) assemblées d'une seule pièce qui présentent de préférence des fentes unilatérales axiales, s'engageant dans un éventuel détalonnage, et qui déforme radialement les garnitures de serrage assemblées d'une seule pièce, lors du vissage de la contre-douille (3), en coopérant avec le cône de pression (15) de la contre-douille (3), les points de serrage (8) pouvant être comprimés parallèlement.

41. Passe-câble à vis selon l'une des revendications 1 à 40, caractérisé en ce que les deux garnitures de serrage assemblées d'une seule pièce sont aussi formées d'une seule pièce sur la douille à vis.

42. Passe-câble à vis selon la revendication 41, caractérisé en ce que la contre-bague de pression avec son côté frontal éloigné de la garniture de serrage, agit sur un organe d'étanchéité (23) se raccordant axialement et le déforme lors du serrage de la contre-douille en position d'étanchéité.

43. Passe-câble à vis selon l'une des revendications précédentes, caractérisé en ce que la contre-bague de pression entoure totalement ou partiellement en forme de manchon le côté extérieur de l'organe d'étanchéité et forme ainsi un écran à l'égard du filetage.

44. Passe-câble à vis selon l'une des revendications 1 à 43, caractérisé en ce que la contre-bague de pression (35) est fendue et est en même temps déformable radialement contre une région de la bague d'étanchéité (23), partiellement entourée par cette contre-bague, sous l'action d'une surface oblique.

45. Passe-câble à vis selon l'une des revendications 1 à 44, caractérisé en ce qu'une bague d'étanchéité (23) placée d'une part entre deux garnitures de serrage (5) éventuellement d'une seule pièce et d'autre part une troisième garniture de serrage, est soumise, sur au moins l'un de ses côtés frontaux, à l'action d'une contre-bague de pression (35) qui s'applique de son côté contre l'une des garnitures de serrage (5).

46. Passe-câble à vis selon l'une des revendications 1 à 45, caractérisé en ce que la bague d'étanchéité (23), placée à l'extérieur des deux garnitures de serrage, éventuellement assemblées d'une seule pièce, dans le prolongement de la garniture de serrage intérieure en forme de douille à vis, est entourée par un prolongement extérieur (38) de la garniture de serrage (5), sur son côté extérieur et est protégée, par rapport à la région filetée du passe-câble à vis (1), ce prolongement (38) pouvant être assemblé d'une seule pièce à la douille à vis.

47. Passe-câble à vis selon l'une des revendications 1 à 46, caractérisé en ce que la surface de pression (15) - oblique ou arrondie - de la contre-douille (3) et la surface de pression (46) tournée vers celle-ci et/ou la surface de pression (51) opposée de la bague de pression (35), ont l'une par rapport à l'autre des pentes ou des angles de pente de grandeur différente.

48. Passe-câble à vis selon l'une des revendications 1 à 47, caractérisé en ce que la surface de pression (15) de la contre-douille (3), agit sur la surface de pression (46) de la contre-bague de pression (35), lors du réglage axial du parcours de réglage sur la garniture de serrage (5) et en ce qu'il est prévu, en position initiale entre la contre-bague de pression (35) et l'appui de butée (47) contre le côté intérieur de la contre-douille (3), un écartement (48) qui diminue et est supprimé lors du réglage axial.

49. Passe-câble à vis selon l'une des revendications 1 à 47, caractérisé en ce que la contre-bague de pression (35) s'engageant dans la rainure extérieure (49) de la garniture de serrage (5), éventuellement assemblée d'une seule pièce avec la douille à vis (2), s'applique en position initiale contre l'épaulement (47) et en ce qu'il est prévu un écartement (50) qui est réduit et supprimé lors du réglage axial, entre la surface de pression (13) de la garniture de serrage (5) et la surface de pression (15) intérieure de la contre-douille (3).

Fig 1

Fig 2

Fig. 3

Fig. 4

33

Fig 5

Fig.6

Fig.7

Fig. 8

Fig. 9

Fig.10

Fig. 11

Fig. 12

Fig.13

Fig.14

36

Fig. 15

Fig. 16

Fig. 17

Fig. 18

Fig. 19

Fig 20

Fig 21

Fig. 22

Fig. 23

Fig. 24

Fig. 25

Fig. 26

Fig. 27

Fig. 28

Fig. 29

Fig. 30

A-A

Fig. 31

B - B

Fig. 32

EP 0 203 269 B1

Fig. 33

Fig. 34

44

Fig. 35

Fig. 36

Fig. 37

Fig. 38

Fig. 39

Fig. 40

Fig. 41

Fig.42

Fig.43

Fig.44

Fig.45

Fig.46

Fig. 47

Fig. 49

Fig. 48

Fig. 50

Fig.51

Fig.52

Fig.53

Fig. 54

Fig. 55

Fig. 56

Fig. 57

51

Fig. 58

Fig. 59

Fig. 60

Fig. 61

Fig.62

Fig 63

Fig. 64

Fig. 65

Fig. 66

Fig. 67

Fig. 68

Fig. 69

Fig. 70

Fig. 71

Fig. 72

56

Fig. 73

Fig. 74

Fig. 75

Fig. 76